# EUROPEAN PATENT APPLICATION

(11) **EP 4 529 286 A1**
(43) Date of publication of application: **26.03.2025**
(21) Application number: 23818945.0
(22) Date of filing: 25.05.2023
(51) Int. Cl.: H04W 52/02

(54) **INFORMATION TRANSMISSION METHOD, COMMUNICATION NODE AND STORAGE MEDIUM**

(30) Priority: 08.06.2022 CN 202210647889
(71) Applicant: ZTE Corporation, Shenzhen, Guangdong 518057 (CN)
(72) Inventor: YUAN, Zhifeng, Shenzhen, Guangdong 518057 (CN); MA, Yihua, Shenzhen, Guangdong 518057 (CN); YU, Guanghui, Shenzhen, Guangdong 518057 (CN); HU, Liujun, Shenzhen, Guangdong 518057 (CN); XIA, Shuqiang, Shenzhen, Guangdong 518057 (CN)
(74) Representative: Aipex B.V.
(86) International application number: PCT/CN2023/096168
(87) International publication number: WO 2023/236780

(57) **Abstract**

Provided are an information transmission method, a communication node, and a storage medium. The information transmission method includes acquiring location information of a first communication node and timing advance of signal transmission of the first communication node; and transmitting a data packet including at least the location information and the timing advance to a second communication node. A sending time the data packet is transmitted to the second communication node is determined by the timing advance.

## Description

### TECHNICAL FIELD

The present application relates to the field of communications, for example, an information transmission method, a communication node, and a storage medium.

### BACKGROUND

Integrated sensing and communication (ISAC) refers to the fusion of communication and sensing, enabling a future communication system to possess both the communication function and the sensing function. Future wireless communication systems require ISAC.

An important scenario in a future wireless communication sys tem is the Internet of Things (IoT) or massive machine-type communication (mMTC). In an IoT or mMTC communication scenario, an important service is to acquire the location information of a user equipment (UE).

To satisfy the requirements of ISAC and IoT/mMTC, the location information of a large number of UEs is required. However, when sending location information, the UEs consume more power. Therefore, it is urgent to reduce the additional power consumption of the UEs while satisfying the requirements of ISAC and IoT/mMTC.

### SUMMARY

The present application provides an information transmission method, a communication node, and a storage medium.

Embodiments of the present application provide an information transmission method. The method is applied to a first communication node. The method includes acquiring location information of the first communication node and a timing advance of signal transmission of the first communication node; and transmitting a data packet including at least the location information and the timing advance to a second communication node. A sending time the data packet is transmitted to the second communication node is determined by the timing advance.

Embodiments of the present application further provide an information transmission method. The method is applied to a second communication node. The method includes determining a transmission resource; and indicating a position of the transmission resource to a first communication node by using a target signaling. The transmission resource is configured to be used by the first communication node to transmit a data packet including at least location information and a timing advance.

Embodiments of the present application further provide a communication node. The communication node includes at least one processor and a storage apparatus configured to store at least one program. When the at least one program is executed by the at least one processor, the at least one processor performs the preceding information transmission method.

Embodiments of the present application further provide a storage medium storing a computer program which, when executed by a processor, causes the processor to perform the preceding information transmission method.

### BRIEF DESCRIPTION OF DRAWINGS

FIG. 1A is a diagram illustrating an implementation of acquiring location information of a terminal according to an embodiment.
FIG. 1B is a diagram illustrating an implementation of monitoring weather condition according to an embodiment.
FIG. 1C is a diagram illustrating an implementation of monitoring sand and dust information according to an embodiment.
FIG. 2 is a flowchart of an information transmission method according to an embodiment.
FIG. 3 is another flowchart of an information transmission method according to an embodiment.
FIG. 4 is a diagram illustrating an implementation of transmitting a data packet according to a pilot scheme according to an embodiment.
FIG. 5A is a diagram illustrating an implementation of a pilot scheme according to an embodiment.
FIG. 5B is another diagram illustrating an implementation of a pilot scheme according to an embodiment.
FIG. 6A is a diagram illustrating an implementation of transmitting a data packet based on pilots according to an embodiment.
FIG. 6B is another diagram illustrating an implementation of transmitting a data packet based on pilots according to an embodiment.
FIG. 7 is another diagram illustrating an implementation of a pilot scheme according to an embodiment.
FIG. 8 is another diagram illustrating an implementation of a pilot scheme according to an embodiment.
FIG. 9A is another diagram illustrating an implementation of a pilot scheme according to an embodiment.
FIG. 9B is another diagram illustrating an implementation of a pilot scheme according to an embodiment.
FIG. 10A is a diagram illustrating an implementation of a defined physical resource block according to an embodiment.
FIG. 10B is a diagram illustrating an implementation of a defined demodulation reference signal according to an embodiment.
FIG. 10C is another diagram illustrating an implementation of a defined demodulation reference signal according to an embodiment.
FIG. 11A is a diagram illustrating an implementation of a defined demodulation reference signal by using an OCC according to an embodiment.
FIG. 11B is another diagram illustrating an implementation of a defined demodulation reference signal by using an OCC according to an embodiment.
FIG. 11C is a diagram illustrating another implementation of a defined demodulation reference signal by using an OCC according to an embodiment.
FIG. 12A is a diagram illustrating an implementation of PRB-based transmission according to an embodiment.
FIG. 12B is another diagram illustrating an implementation of a defined demodulation reference signal according to an embodiment.
FIG. 12C is another diagram illustrating an implementation of a defined demodulation reference signal according to an embodiment.
FIG. 12D is another diagram illustrating an implementation of a defined demodulation reference signal according to an embodiment.
FIG. 13A is a diagram of a BPSK symbol according to an embodiment.
FIG. 13B is another diagram of a BPSK symbol according to an embodiment.
FIG. 13C is another diagram of a BPSK symbol according to an embodiment.
FIG. 14A is a diagram illustrating an implementation of a defined reference signal according to an embodiment.
FIG. 14B is another diagram illustrating an implementation of a defined reference signal according to an embodiment.
FIG. 15A is another diagram illustrating an implementation of a defined reference signal according to an embodiment.
FIG. 15B is a diagram illustrating an implementation of generating a DMRS port according to an embodiment.
FIG. 16A is a diagram illustrating an implementation of another defined reference signal according to an embodiment.
FIG. 16B is another diagram illustrating an implementation of a defined reference signal according to an embodiment.
FIG. 17 is a diagram illustrating an implementation of an information transmission method according to an embodiment.
FIG. 18 is a diagram illustrating the structure of an information transmission apparatus according to an embodiment.
FIG. 19 is another diagram illustrating the structure of an information transmission apparatus according to an embodiment.
FIG. 20 is a diagram illustrating the hardware structure of a communication node according to an embodiment.

### DETAILED DESCRIPTION

Embodiments of the present application are described hereinafter in conjunction with drawings.

The operations illustrated in the flowcharts among the drawings may be performed by, for example, a computer system capable of executing a set of computer-executable instructions. Moreover, although logical sequences are illustrated in the flowcharts, in some cases, the illustrated or described operations may be performed in sequences different from those described herein.

In this embodiment, a future wireless communication system may include the following three requirements.
1. The requirement for integrated sensing and communication, such as constructing high-precision 3D environmental maps using communication signals; detecting rainfall, dust, and chemical gas concentrations using communication signals; monitoring road conditions using communication signals; and implementing security functions using communication signals.
2. The requirement for enhancing the performance of the communication system, such as enabling easier and more accurate multi-user pairing and scheduling, beamforming, and base station energy saving.
3. The requirement for better supporting IoT/mMTC.

On one hand, future wireless communication systems require ISAC. If the system is able to acquire the location information of a large number of terminals (that is, UEs) and is able to know the channel information that the wireless signals transmitted by the terminals experiences (that is, know the channels through which the electromagnetic waves are transmitted from these locations to the base station), then this information (that is, the location information and the channel information) may be used for many purposes, such as constructing environmental maps; monitoring weather conditions such as rainfall and snowfall in real time, especially heavy rain or snow, and monitoring dust, particulate matter, and chemical gases in real time; monitoring foot traffic and vehicular traffic to assist in traffic management and to provide information for public governance; sensing the number of terminals at a location and implementing security functions through communication signals; and achieving base station energy saving and load balancing.

Future wireless communication systems also have the requirement for better supporting IoT/mMTC. If the system is able to acquire the location information of the large number of terminals, then better IoT services may be provided, such as asset tracking, logistics management, and services of preventing children/elderly/pets from getting lost.

Before using the solutions disclosed in embodiments of the present application, users should be informed of the types, scope, and scenarios of personal information involved in the present application in accordance with relevant laws and regulations in appropriate manners. The data cannot be used before getting user authorization. That is, in solutions of the present application, the acquisition, storage, use, and processing of data all comply with relevant national laws and regulations. For example, the acquisition, storage, use, and processing of the location information of a terminal all comply with relevant national laws and regulations.

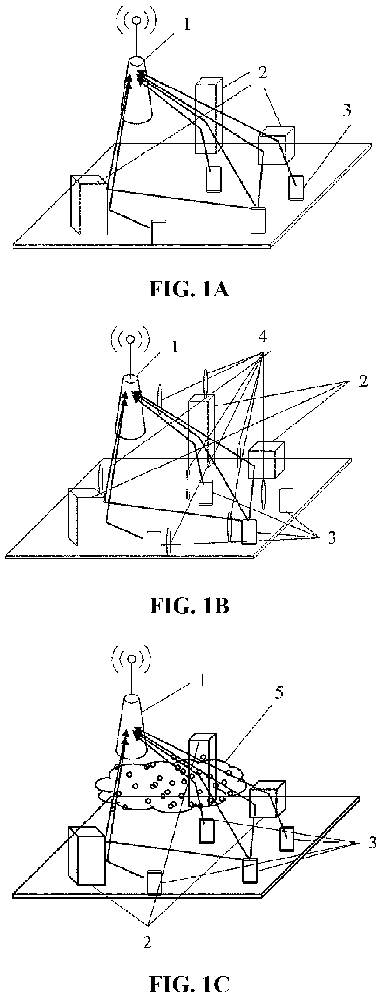

FIG. 1A is a diagram illustrating an implementation of acquiring location information of a terminal according to an embodiment. As shown in FIG. 1A, 1 indicates a base station, 2 indicates a building, and 3 indicates a terminal. The base station 1 is able to acquire the location information of a large number of terminals 3 located at different positions (such as position 1, position 2, ..., and position K) and is also able to acquire channel information (such as channel 1, channel 2, ..., channel K) experienced by wireless signals sent by the terminals 3.

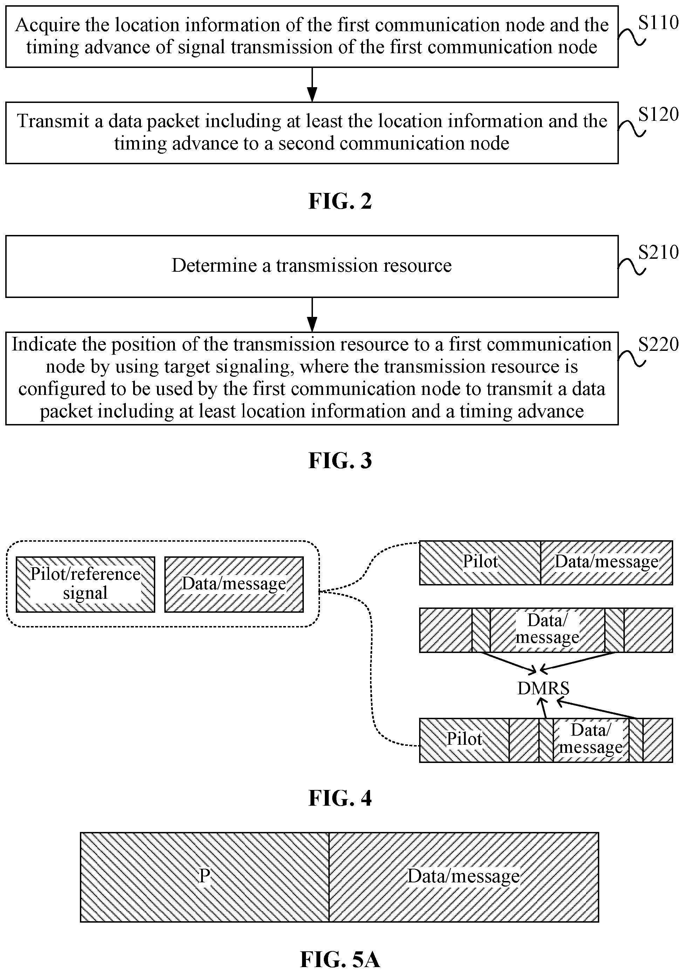

FIG. 1B is a diagram illustrating an implementation of monitoring weather condition according to an embodiment. As shown in FIG. 1B, 4 indicates rain or snow. The corresponding rain or snow weather condition may be sensed by using the location information of the terminals 3.

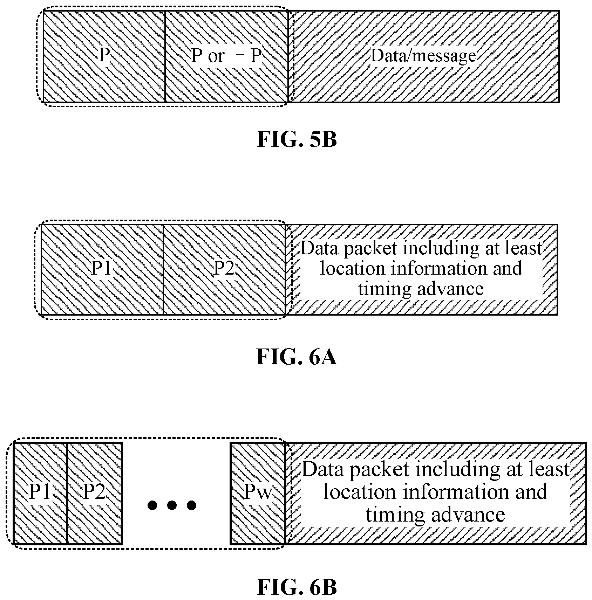

FIG. 1C is a diagram illustrating an implementation of monitoring sand and dust information according to an embodiment. As shown in FIG. 1C, 5 indicates sand or dust. The corresponding sand or dust condition may be sensed by using the location information of the terminals 3.

However, the terminals are required to transmit the location information of the terminals, so the power consumption of the terminals grows. Therefore, the terminals of most private users may resist the requirement of "sending private location information". For example, if the function of "sending private location information" is optional, many users may disable the function. Alternatively, some terminals may use "not sending location information" as a point of attracting users. The resistance results in a significant reduction in the number of terminals that provide location information, thus reducing the performance of related solutions that rely on "location information and corresponding wireless channel information (experienced by the wireless signal sent by the terminal)".

In this embodiment, related uplink information transmission or uplink data transmission first requires that the terminal (that is, the UE) is located in a connected state. The connected state may also be referred to as the Radio Resource Control (RRC) connected state. However, the terminal in the connected state generally does not have dedicated uplink transmission resources. Therefore, the terminal in the connected state requires to request uplink transmission resources from the base station before transmitting data. Only after the uplink resource grant of the base station is obtained, can the terminal transmit information on the time-frequency resource specified by the base station. It can be seen that the terminal requires to complete many operations to complete one relevant uplink data transmission. If the terminal is required to send location information by using a related uplink data transmission mechanism, the power consumed by the terminal to send location information is undoubtedly increased, and signaling overheads of the system are also increased. The analysis is as follows.

First, to save power, the terminal transmits location information at a very low frequency, usually once every several seconds, tens of seconds, or even several minutes. In this case, when the location information is not required to be transmitted and there is no other service, to save power, the terminal is usually in the idle state or the inactive state, that is, to save power, the terminal generally does not enter the connected state (that is, the terminal is not in the connected state). The terminal requires operations when entering or maintaining the connected state, thus increasing the power consumption of the terminal. The terminal requires no such operations when in the non-connected state, that is, the idle state or the inactive state, thus saving power.

That is, when the terminal is not required to transmit location information or has no other service, the terminal is usually not connected to the system (that is, disconnected from the system), that is, the terminal is in non-connected state (or non-RRC-connected state, connectionless state, connection-free state, or disconnected state). In this case, there is no context of the terminal. In this embodiment, the idle state or the inactive state may be considered equivalent to the non-connected state or may be considered to be the non-connected state.

When the terminal is originally in the non-connected state (that is, has not entered the connected state or has not established a connection to the system), if the related uplink data transmission scheme is used, to transmit the location information, the terminal must establish a connection to the system before transmission. Only after the terminal enters the connected state (also referred to as an active state), can the terminal apply to the system (such as the base station or an access point) for uplink transmission resources. Only after the resource grant or resource scheduling of the system is obtained, can real transmission of the location information be performed. A random access procedure is required for the terminal to enter the connected state from the non-connected state. This random access procedure requires the terminal to perform multiple interaction procedures with the base station: The terminal sends a preamble, the base station makes a random access response (RAR), the terminal sends layer-2 or layer-3 control information and a base station message 4 (Message 4), undoubtedly greatly increasing the power consumption of the terminal each time the terminal transmits the location information of the terminal.

When the above related uplink data transmission scheme is used, if a relatively large number of terminals that require to transmit the location information require to enter the connected state before transmitting the location information, the large number of terminals perform random access procedures and then apply for uplink resource grant. The large number of terminals mean that the random access procedures may probably collide with each other or block each other, causing many terminals to require many access attempts before succeeding. To complete the task of transmitting location information, the energy and signaling consumed by the terminal increase. It can be seen that the related uplink data transmission scheme is not applicable to the application scenario where a large number of terminals transmit location information.

In this embodiment, the related uplink data transmission scheme may also be semi-persistent scheduling (SPS). SPS is used to reduce physical control signaling overheads and delay of small data packet services and is applicable to periodic services such as Voice-over-IP (VoIP). The data rate of VoIP in a talk spurt is basically constant: A voice packet is generated per 20 ms. Each talk spurt continues 1 to 2s on average and contains 50 to 100 voice packets, and the small-scale fading in each talk spurt is compensated for by using closed-loop power control, ensuring that the signal-to-noise ratio (SNR) of the receiving-side signal is basically constant. Therefore, in the period of each talk spurt, the modulation and coding scheme (MCS) may remain unchanged, and the allocated physical resources remain unchanged or jump according to a fixed rule. Therefore, dynamic signaling is not required. SPS may be considered as an enhancement form of semi-persistent configuration and is mainly used for a periodic small packet service having a constant packet size. SPS generally works in the connected (RRC connected) state, that is, the terminal has completed the initial access process. Although the scheduling frequency is much lower than the arrival rate of the data packet, it is essentially non-competitive. Resource collision (for example, reference signal/pilot collision) does not occur between different users. In the fifth-generation mobile communication technology (5G) system, the evolved SPS may be used in Ultra-Reliable and Low Latency Communications (URLLC) scenarios, ensuring high reliability and reducing user-plane latency. In this case, SPS may also be referred to as a configured grant, that is, preconfigured resource grant. The configured grant is also considered a special grant-free or scheduling-free manner because the configured grant eliminates the need for a "dynamic grant request" or "dynamic scheduling request" for each data transmission. Therefore, the configured grant is essentially " dynamic grant free" or "dynamic scheduling free." This SPS "dynamic scheduling free" transmission means that the transmission resources for different users are essentially preconfigured by the base station, not acquired by users through "contention". Therefore, SPS "dynamic scheduling free" transmission may be described as "non-contention-based". The most important aspect is that for this type of non-contention-based scheduling-free transmission, reference signals are usually preconfigured by the base station to avoid "collision". For example, the base station may preconfigure the reference signals to ensure that the reference signals of users transmitting on the same time-frequency resources are orthogonal.

Although preconfigured scheduling-free methods like SPS or configured grant is able to reduce the overheads of physical control signaling for uplink transmission, if the SPS method is used for reporting the location information of a large number of users, the spectral efficiency of the system remains very low. This is because if a terminal requests periodic transmission resources in a cell for a period, but the terminal undergoes a handover during this period, the terminal requires to request new preconfigured transmission resources from the new cell it enters while notifying the previous cell to release its preconfigured resources. The process in which the terminal reapplies for transmission resources in the newly entered cell is rather complex. Typically, a random access procedure is required in the new cell, increasing both the power consumption of the terminal and the signaling overheads of the system. In the scenario of transmitting location information, terminals transmit location information at a relatively low frequency to conserve power, with intervals being relatively long between transmissions. Therefore, to improve the efficiency, the intervals for preconfigured resources are usually relatively long. This means that the adverse effects of handover increase, thereby reducing the spectral efficiency of the system and increasing the complexity of the system. Even if different terminals or nodes are fixed, for a long time, the surrounding environment of the terminals or nodes is prone to change. This also affects handover, especially terminals or nodes at the edge of a cell.

Based on the embodiment, it can be seen that although the SPS preconfiguration mechanism is also able to achieve grant-free transmission or scheduling-free transmission, the SPS preconfiguration mechanism is not suitable for the application scenario of transmitting location information by a large number of terminals.

On the other hand, in wireless communication systems such as Long-Term Evolution (LTE) or New Radio (NR) system, one important feature of uplink transmission is that the signals sent by different terminals arrive at the base station at essentially aligned or synchronized time. Accurately, the base station requires that signals of different UEs arrive at the base station at a time within the range of the cyclic prefix (CP) of the orthogonal frequency-division multiplexing (OFDM) symbol. However, since different terminals are distributed in different geographical locations, some terminals are closer to the base station, and some terminals are farther from the base station. Therefore, transmission delays with which signals transmitted by different terminals arrive at the base station are different. For a terminal that is farther from the base station, a relatively large transmission delay occurs when a wireless signal transmitted by the terminal arrives at the base station. In a wireless communication system, the base station may require that the delays with which signals of different UEs arrive at the base station are all within the CP range of the OFDM symbol. This requires that different terminals have different timing advances for the sent signals. Therefore, in the present application, the wireless communication system may use the uplink timing advance (UTA) mechanism.

The related uplink timing advance mechanism is as follows: (A) The terminal sends a signal. (B) The base station estimates the transmission delay through the signal to obtain a timing advance (TA). (C) The base station notifies the terminal of the TA by using a piece of signaling. The signaling may be generally referred to as a timing advance command (TAC). (D) When the terminal sends a data packet to the base station, the terminal determines the sending time of the signal corresponding to the data packet according to the TA. That is, the terminal advances the sending time of the signal by the TA indicated by the base station. In this manner, the signal is transmitted to the base station without delay after transmission delay.

In the above related uplink timing advance method, the terminal requires a series of interaction processes to obtain the timing advance for signal transmission. However, for transmission in the non-connected state, the terminal does not send any signal before transmission. In this manner, the base station cannot determine the corresponding timing advance by measuring the signal sent by the terminal and thus cannot send a timing advance command to the terminal. It can be seen that by using the related uplink timing advance method, the terminal in the non-connected state cannot acquire a timing advance. Therefore, transmission of the data packet by the terminal has a relatively large transmission delay, making demodulation of the base station extremely difficult. This is because the base station requires to estimate different transmission delays of signals of different terminals before making correct compensation before demodulating and decoding the signals.

Therefore, the present application provides an information transmission method so that the terminal can generate and transmit a particular signal (that is, a data packet including at least location information and a timing advance in the non-connected state) to determine the transmission delay of the signal to reduce the demodulation difficulty of data transmission in the non-connected state by the base station and implement sensing of the transmission environment. In the present application, a data packet including at least location information and a timing advance is sent, reducing power consumption caused by repeated interactions between the first communication node and the second communication node to determine transmission resources and the TA, greatly alleviating the power consumption caused by transmission of the location information by the terminal, enabling the second communication node to acquire the data packet including at least the location information and the timing advance while reducing power consumption, satisfying the ISAC and IoT/mMTC requirements, reducing users' worry about power consumption caused by transmission of the location information, and enabling the function of "sending private location information" to be a mandatory function of the terminal or an obligatory or compulsory of the terminal: Each terminal is able to pass authentication only when the terminal has this function when the terminal undergoes authentication for network access. Moreover, this function cannot be disabled, preventing the terminal from being disabled after the terminal passes authentication. This greatly increases the number of terminals that provide location information, thereby improving the performance of various solutions based on "location information" or based on "location information and wireless channel information corresponding to the location information".

To solve the preceding problem, FIG. 2 is a flowchart of an information transmission method according to an embodiment. As shown in FIG. 2, the method of this embodiment may be applied to a first communication node (such as a UE). The method includes S110 and S120.

In S110, location information of the first communication node and a timing advance sent of signal transmission of the first communication node are acquired.

In this embodiment, the first communication node may be considered as a terminal (that is, a UE). The location information may be understood as information representing the current location (typically the geographical location) of the first communication node. The first communication node may acquire the current location information of the first communication node. No limitation is imposed on how to acquire the location information of the first communication node. For example, the first communication node may acquire the current location information of the first communication node by using a positioning module disposed on the first communication node. Alternatively, the first communication node may receive the location information of the first communication node from another place, for example, receive the calculated location information of the first communication node from the base station.

This embodiment imposes no limitation on how to acquire the timing advance of the signal transmission of the first communication node. For example, the first communication node may autonomously determine the timing advance of the signal transmission; or may determine the timing advance according to the related information included in the signal broadcast by the second communication node.

In S 120, a data packet including at least the location information and the timing advance is transmitted to the second communication node.

In this embodiment, the data packet may be understood as a data unit for data transmission in a communication process, and the data packet includes to-be-transmitted data.

Because the TA is determined by the terminal, even if the base station demodulates and decodes the signal of the terminal correctly, that is, decodes the data packet transmitted by the terminal, the base station cannot learn about the timing advance of the signal transmission of the terminal. In this manner, the transmission delay experienced by the terminal in signal transmission cannot be learned about, and thus sensing of the transmission environment cannot be implemented by using the signal of the terminal. Therefore, the first communication node (that is, the terminal) may transmit the data packet including at least the location information and the timing advance to the second communication node (that is, the base station). In this manner, after correctly demodulating and decoding the data packet of the terminal, the base station may acquire the timing advance of signal advance transmission of the terminal. The base station may estimate a multipath channel according to the received signal of the terminal. In this manner, the base station may combine the timing advance of the signal transmission of the terminal with the multipath channel experienced by the terminal to obtain a real transmission delay of all paths through which the wireless signal sent by the terminal goes to the base station. Based on this, the signal transmission distance can be calculated based on the transmission delay of these paths, thereby implementing sensing of the transmission environment.

The sending time the data packet is transmitted to the second communication node may be determined by the timing advance. How to determine the sending time according to the timing advance is not limited here.

In an embodiment, the data packet including the location information may also include or not include identity information corresponding to the first communication node. The identity information may be understood as information that represents the identity of the first communication node. The identity information may uniquely identify the first communication node and may be considered as a tag of the first communication node. The acquisition, storage, use, and processing of the identity information in the present application all comply with relevant national laws and regulations.

In an embodiment, to save power consumption of the terminal (that is, the first communication node) and to reduce the demodulation difficulty of data transmission in the non-connected state by the base station, the first communication node may transmit, in the non-connected state, the data packet that includes at least location information to the second communication node. The non-connected state may be considered as the preceding connectionless state, that is, the idle state or the inactive state. How to transmit the data packet including at least the location information and the timing advance to the second communication node is not limited here. For example, the data packet may be transmitted based on the time-frequency resource in the specified transmission resources by receiving the signaling transmitted by the second communication node and used for indicating the locations of the transmission resources.

The location information of the first communication node is transmitted in the non-connected state so that the first communication node saves the trouble of establishing a connection to the second communication node in advance and saves the trouble of requesting the second communication node to allocate dedicated resources used for uplink data transmission to the first communication node, thereby avoiding power consumption in establishing a connection by the first communication node. Moreover, after the transmission of the location information is completed, because the transmission is performed in the non-connected state, the first communication node does not need to perform a corresponding connection release operation, thereby saving power consumption. Therefore, in this embodiment, the acquired location information of the first communication node is transmitted in the non-connected state to the corresponding second communication node, preventing the increase in power consumption caused by repeated interactions for establishing a connection to the second communication node.

Based on this, the first communication node may also place the autonomously determined timing advance in the transmitted data packet so that the base station can correctly demodulate and decode the data packet of the terminal to obtain the timing advance included in the transmitted data packet. The base station may estimate a multipath channel according to the received signal of the terminal. In this manner, the base station may combine the timing advance of the signal transmission of the terminal with the multipath channel experienced by the terminal to obtain a real transmission delay of all paths through which the wireless signal sent by the terminal goes to the base station. Based on this, the signal transmission distance can be calculated based on the transmission delay of these paths, thereby implementing sensing of the transmission environment.

In an embodiment, the timing advance of the signal advance transmission of the terminal may be a value that may be represented by one or more bits. For example, the time period from 0 to the maximum timing advance (for example, set to TAmax) may be divided into 2^D (that is, the Dth power of 2) parts. In this manner, one timing advance in this time period may be represented by D bits. That is, the timing advance determined by the terminal may be one of the 2^D values. The terminal may send the signal in advance according to the determined timing advance. The terminal may put the D bits corresponding to the timing advance into the data packet, encode and modulate the D bits, and then transmit the encoded and modulated D bits to the base station. In this manner, after correctly demodulating and decoding the data packet of the terminal, the base station may obtain, by using the D bits corresponding to the timing advance, the determined timing advance of the signal advance transmission of the terminal.

In an embodiment, the timing advance of the signal transmission of the first communication node is determined by a broadcast signal of the second communication node.

In this embodiment, the terminal (that is, the first communication node) may determine, by using the signal broadcast by the base station (that is, the second communication node), the timing advance of the signal transmission of the terminal. How to determine the timing advance based on the broadcast signal is not limited here. For example, the base station may broadcast the location information corresponding to the base station, and then the terminal may calculate the distance between the two based on the location information of the base station and the location information of the terminal and then determine the transmission delay of the signal of the terminal based on the distance between the two to determine the timing advance required for the signal transmission by the terminal.

In an embodiment, the broadcast signal of the second communication node includes a downlink synchronization signal or a downlink reference signal.

In this embodiment, the broadcast signal of the second communication node may include the downlink synchronization signal or the downlink reference signal. For example, the base station broadcasts the downlink synchronization signal or the downlink reference signal, and the terminal may calculate the strength of the downlink synchronization signal or the downlink reference signal and estimate a TA according to the strength of the signal. After determining the TA (that is, the TA estimated by the terminal according to the strength of the downlink synchronization signal or the downlink reference signal), the terminal may transmit the transmission signal in advance according to the TA, that is, the timing advance of the signal advance transmission of the terminal is equal to the TA determined by the terminal.

In an embodiment, the broadcast signal of the second communication node includes location information of the second communication node.

In this embodiment, the broadcast signal of the second communication node may include the location information of the second communication node. For example, the base station may broadcast the location information corresponding to the base station, and then the terminal may calculate the distance between the two based on the location information of the base station and the location information of the terminal and then determine the transmission delay of the signal of the terminal based on the distance between the two to determine the timing advance required for the signal transmission by the terminal.

In an embodiment, transmitting the data packet including at least the location information and the timing advance to the second communication node includes transmitting, on a predefined common channel, the data packet including at least the location information and the timing advance to the second communication node.

In this embodiment, the first communication node may transmit, on the predefined common channel, the data packet including at least the location information and the timing advance to the second communication node. The predefined common channel may be considered as predefined by the wireless communication system and does not need to be notified by dedicated or UE-specific signaling.

In an embodiment, the method also includes acquiring target signaling; and determining, according to the target signaling, a transmission resource configured or defined by the second communication node. The transmission resource is configured to be used by the first communication node to transmit the data packet including at least the location information and the timing advance.

In this embodiment, the target signaling may be understood as signaling used for configuring or defining the location of the transmission resource. The transmission resource may be understood as a common time-frequency resource used by the first communication node (for example, the first communication node in the non-connected state) to transmit the data packet including at least the location information and the timing advance. That is, the transmission resource may include multiple time-frequency resources.

The transmission resource may be a common resource defined or configured by the second communication node. The target signaling may be broadcast signaling defined by the second communication node and configured to indicate the location of the transmission resource. Based on this, the first communication node may acquire the target signaling transmitted by the second communication node and determine, according to the target signaling, the transmission resource configured or defined by the second communication node.

In an embodiment, transmitting the data packet including at least the location information to the second communication node includes selecting a time-frequency resource from the transmission resource; and transmitting, on the time-frequency resource, the data packet including at least the location information and the timing advance to the second communication node.

In this embodiment, the first communication node selects one time-frequency resource from the transmission resource and transmits, on the selected time-frequency resource, the data packet including at least the location information and the timing advance to the second communication node. How the first communication node selects the time-frequency resource from the transmission resource is not limited here. For example, the first communication node may designate, according to the actual requirements, one time-frequency resource from the transmission resource and transmit the location information and the timing advance on the designated time-frequency resource.

In an embodiment, transmitting the data packet including at least the location information and the timing advance to the second communication node includes determining W pilots; and transmitting the data packet together with the W pilots to the second communication node. W is greater than 1.

In this embodiment, wireless communications generally requires to insert pilots into the transmitted signal or transmitted data packet so that the receiver (that is, the second communication node) may estimate, by using the pilots, channels and time and frequency offsets through which the transmitted signal or the transmitted data packet experiences, thereby implementing demodulation of data symbols in the data packet. Pilots included in the transmitted signal or the transmitted data packet may also be referred to as pilot signals, reference signals (RSs), or demodulation reference signals (DMRSs). Each pilot included in the transmitted signal or the transmitted data packet is usually a sequence or a string of symbols and thus may also be referred to as a pilot sequence.

In the process of transmitting the data packet including at least the location information and the timing advance to the second communication node, the first communication node may first determine W pilots (W is greater than 1, that is, at least two pilots may be determined first). Based on this, the data packet including at least the location information and the timing advance and the W pilots may be transmitted to the corresponding second communication node together. The pilots are not limited here. For example, the pilots may be extremely sparse pilots. When the data packet and the W pilots are transmitted, the locations of the pilots may be included in the data packet (for example, in the middle of the data packet) or may be outside the data packet (for example, in front or rear of the data packet). This is not limited here.

This embodiment imposes no limitation on how to determine the W pilots. For example, the first communication node may autonomously select or generate the pilots.

Illustratively, in the non-connected state, the first communication node (for example, the terminal) transmits the data packet including at least the location information and the timing advance to the second communication node. In this case, because the first communication node does not enter the connected state during transmission, the pilots specified by the second communication node (for example, the base station or the access point) cannot be obtained. Therefore, the pilots used in the transmission of the data packet may be autonomously selected or generated by the first communication node. Selecting the pilots means that the first communication node selects the pilots from a preset pilot set or a pilot set. Generating the pilots means that the first communication node generates the pilots according to a preset rule or formula. Actually, all pilots generated according to the preset rule or formula constitute a preset pilot set or a pilot set. Therefore, it may be understood that generating the pilots according to the preset rule or formula is equivalent to selecting pilots from a preset pilot set. The two are equivalent. In subsequent embodiments, an example in which pilots are selected from a preset pilot set is described. It can be seen that autonomously selecting pilots means that the terminal (that is, the first communication node) may determine, by itself, how to select pilots from a preset pilot set without being indicated or arranged by the signaling of the second communication node (for example, the base station or the access point) to determine, in the non-connected state, the to-be-transmitted pilots. Otherwise, if the pilots required for transmission require to be indicated or arranged by the base station (that is, the second communication node), then the terminal requires to acquire, before transmission, signaling that is delivered by the base station and that is used for indicating the pilots. In this manner, the transmission of the data packet requires the terminal to first acquire a connection to the base station. Therefore, a process of establishing a connection is required to be established, and all problems of transmission in the related connection exist. Therefore, the terminal transmits, in the non-connected state, the data packet including at least the location information and the timing advance to the base station or the access point. The pilots included in the transmission may be autonomously selected by the terminal, that is, autonomously determined by the terminal.

In an embodiment, the W pilots are independent of each other.

In this embodiment, the determined W pilots are independent of each other, that is, the W pilots are uncorrelated with each other. The determined W pilots are independent of each other. This means that even after the base station knows one of the pilots, the base station cannot infer other W - 1 pilots based on this pilot.

In an embodiment, the W pilots are determined by using information in the transmitted data packet.

In this embodiment, the W pilots may be determined by using information in the transmitted data packet. How to determine the W pilots by using information in the transmitted data packet is not limited here. For example, in addition to the location information and the timing advance, information in the transmitted data packet may also include information for determining the W pilots, for example, information such as the indexes of the W pilots in the pilot set or the initial state in pilot generation. Alternatively, information in the transmitted data packet also serves to indicate information such as the indexes of the W pilots in the pilot set or the initial state in pilot generation. The corresponding W pilots may be determined according to information such as the indexes of the W pilots in the pilot set or the initial state in pilot generation. By including the related information that determines the W pilots in the transmitted data packet to determine the W pilots by using the related information included in the data packet, an additional piece of information used for indicating the W pilots in the transmission process is not required. The related information may be original information in the data packet. The information also serves to indicate the information for identifying the pilots such as the indexes of the W pilots or the initial state in pilot generation. In this manner, once the data packet of the terminal is successfully decoded, information about all pilots used by the terminal in this transmission is learned about, and then all pilots can be reconstructed so that interference cancellation of the pilot signals can be performed.

In an embodiment, the W pilots are determined by using one or more bits in the transmitted data packet.

In this embodiment, one or more bits are required for determination of each pilot sequence. These bits may be original bits in the transmitted data packet. That is, original bits in the transmitted data packet also serve to indicate the information for identifying the pilots such as the indexes of the W pilots or the initial state in pilot generation. For example, bits indicating the location information may be used to indicate the information for identifying the pilots such as the indexes of the W pilots or the initial state in pilot generation. Based on this, the W pilots may be determined by using one or more bits in the transmitted data packet. Each pilot may be determined by using one or more bits. How to determine the W pilots by using one or more bits in the transmitted data packet is not limited here. For example, one or more bits corresponding to each pilot may be used as an index for selection of a corresponding pilot from the pilot set.

Because the W pilots are independent of each other, bits required by the W pilots are independent of each other. In other words, if bits in the transmitted data packet are originally independent of each other, then different bits in the transmitted data packet may be used to determine different pilots. In this manner, the generated W pilots are independent of each other.

In an embodiment, each pilot is from a pilot set including M pilots, and each pilot is determined from the pilot set by using log₂ (M) bits in the transmitted data packet.

In this embodiment, the log function, also referred to as a logarithmic function, is a function whose power (antilogarithm) is an independent variable, whose exponent is a dependent variable, and whose base is a constant. log₂ (M) may be understood as the logarithm of M with a base of 2. For example, if M is 8, log₂ (M) is 3, and if M is 64, log₂ (M) is 6. Each pilot is from a pilot set including M pilots. Here, the value of M is not limited and may be set according to the actual requirements. Each pilot may be determined from a corresponding pilot set by using log₂ (M) bits in the transmitted data packet.

In an embodiment, at least two of the W pilots are different types of pilot sequences or are from different pilot sets.

For example, in one case, the transmission includes one preamble and one demodulation reference signal (DMRS). The two pilots are independent of each other. In addition, the preamble in the transmission comes from a preamble sequence set, and the demodulation reference signal comes from a DMRS set.

In an embodiment, at least two of the W pilots have different lengths.

In an embodiment, U symbols in each of the W pilots are non-zero values. U is greater than 0 and less than 5.

In this embodiment, a symbol that is a non-zero value may be understood as a non-zero symbol, and the non-zero symbol may also be referred to as a non-zero signal or a useful signal. U symbols in each of the W pilots are non-zero values. U is greater than 0 and less than 5. Pilots in this embodiment may be considered as extremely sparse pilots. Extremely sparse pilots may be considered as sparser than conventional sparse pilots. Conventional sparse pilots still require to have reference signals in the entire transmission bandwidth and duration, that is, require to cover the entire transmission bandwidth and duration, so that a wireless multipath channel (that is, a frequency selective channel) in the entire transmission bandwidth and a timing offset and a frequency offset in the transmission duration are able to be estimated by using the reference signals in the entire transmission bandwidth and duration. The reference signals of the sparse pilots have larger intervals, that is, are sparser. Therefor, it can be seen that the tasks or responsibilities of the conventional sparse pilots are actually the same as those of non-sparse pilots: Both of them rely on the reference signals to estimate the frequency selective channel and timing offset and frequency offset of the entire transmission channel. Therefore, although the reference signals may be sparser, the reference signals are required to be dense to a certain degree, that is, cover the entire transmission bandwidth and duration. In contrast, each extremely sparse pilot may be considered as the sparsest in the pilot set in the entire transmission bandwidth and duration. This is because the task of an extremely sparse pilot in channel estimation is to estimate the channel value in only one place; therefore, one extremely sparse pilot may have symbols adjacent in the time domain and the frequency domain in only one place. For example, an extremely sparse pilot may have only one non-zero element (that is, a non-zero symbol), or a sparse pilot may have only one pair of adjacent non-zero elements, that is, two adjacent non-zero elements, or an extremely sparse pilot may have only one set of four adjacent non-zero elements.

In an embodiment, the value of W is 2.

In this embodiment, two pilots may be determined. The data packet including at least the location information and the timing advance together with the two pilots are transmitted to the second communication node.

In an embodiment, transmitting the data packet including at least the location information and the timing advance to the second communication node includes determining one pilot; and transmitting the data packet together with the one pilot to the second communication node. U symbols in the one pilot are non-zero values. U is greater than 0 and less than 5.

In this embodiment, pilots may be considered as extremely sparse pilots.

In the process of transmitting the data packet including at least the location information and the timing advance to the second communication node, the first communication node may first determine one pilot. Only U symbols in the pilot are non-zero values. U is greater than 0 and less than 5. How to determine a pilot is not limited here. For example, a pilot may be selected or generated autonomously. Based on this, the data packet including at least the location information and the timing advance may be transmitted together with the one pilot to the corresponding second communication node.

In an embodiment, the transmission time interval of the data packet including at least the location information and the timing advance is at least greater than a set threshold.

In this embodiment, the transmission time interval of the data packet including at least the location information and the timing advance may be understood as the transmission frequency of the data packet. The set threshold may be understood as a preset time interval threshold. The value of the set threshold is not limited here. For example, the set threshold may be dozens of seconds, several minutes, or one hour.

To save the power consumption of the first communication node, the transmission frequency of the data packet may be set to be not too high. Therefore, the transmission interval of the data packet may be set to be at least greater than the set threshold.

In an embodiment, the set threshold is in seconds or minutes.

In an embodiment, transmitting the data packet including at least the location information and the timing advance to the second communication node includes spreading, by using a spreading sequence, a modulation symbol formed by encoding and modulating the data packet including at least the location information and the timing advance to obtain spread symbols; and transmitting the spread symbols to the second communication node.

In this embodiment, because the base station (that is, the second communication node) may receive, on the same time-frequency resource, data packets that include at least the location information and the timing advance and that are sent by a large number of different terminals (that is, first communication nodes), transmission of these large number of data packets is contention-based, and thus may cause the problem of resource collisions. To address this problem, the modulation performance of the data packets may be optimized. For instance, the data packets that include at least the location information and the timing advance may first be encoded and modulated to form the corresponding modulation symbols. Each modulation symbol is then spread using a spreading sequence to form spread symbols. For example, a spreading sequence of length L may be used to spread each modulation symbol into a symbol of length L. The spreading method is not limited here. For instance, assuming that the n-th modulation symbol before spreading is sₙ and the spreading sequence of length L be [c₁, c₂, ..., c_{L}], spreading sₙ may be performed by multiplying sₙ with each element of the spreading sequence to obtain the spread symbols, that is, [sₙ*c₁, sₙ*c₂, ..., sₙ*c_{L}]. Finally, the spread symbols may be transmitted to the corresponding second communication node.

In an embodiment, the spreading sequence is determined by using information in the transmitted data packet.

In this embodiment, the spreading sequence may be determined by using information in the transmitted data packet. The method of determining the spreading sequence according to the information in the transmitted data packet is not limited here. For example, in addition to the location information and the timing advance, the transmitted data packet may also include the spreading sequence or related information indicating the spreading sequence. Alternatively, the information in the transmitted data packet may also serve to indicate the spreading sequence or related information of the spreading sequence, eliminating the need to add extra information indicating the spreading sequence. Based on the spreading sequence or the related information indicating the spreading sequence, the corresponding spreading sequence is determined.

Content included in the data packet including at least the location information and the timing advance is not limited in the present application as long as the data packet includes the location information and the timing advance. In the present application, the pilots and the spreading sequence may be determined by being indicated by information in the data packet. That is, in addition to representing the inherent meaning, information in the data packet is also used to determine the pilots and the spreading sequence.

The number of bits in the information included in the data packet and used for determining the pilots and the spreading sequence may be the same or different. In the data packet, the positions of the information included in the data packet and used for determining the pilot and the spreading sequence may be the same or different.

In an embodiment, the spreading sequence comes from a set including V spreading sequences. The spreading sequence is determined from the spreading sequence set by using log₂ (V) bits in the transmitted data packet.

In this embodiment, log₂ (V) may be understood as the logarithm of V with a base of 2. For example, if V is 8, then log₂ (V) is 3. The spreading sequence comes from a set including V spreading sequences. The value of V is not limited here and may be set according to the actual requirements. The spreading sequence may be determined from the corresponding spreading sequence set by using log₂ (V) bits in the transmitted data packet. How to determine the spreading sequence from the spreading sequence set by using log₂ (V) bits in the transmitted data packet is not limited here.

In an embodiment, the data packet including the location information and the timing advance does not include information related to the identity of the first communication node.

The identity-related information may be considered as information that can uniquely identify the first communication node.

In an embodiment, the data packet including the location information and the timing advance includes information related to the identity of the first communication node.

In an embodiment, the location information includes at least one of the following: location information from a Global Positioning System, location information from a BeiDou Navigation Satellite System, location information from a cellular positioning system, location information from a positioning system based on a positioning tag, location information from a wireless router (Wi-Fi router) positioning system, location information from a Bluetooth positioning system, or location information from an ultra-wideband positioning system.

Location information from the Global Positioning System may be understood as the location information of the first communication node determined by using the Global Positioning System. Location information from the BeiDou Navigation Satellite System may be understood as the location information of the first communication node determined by using the BeiDou Navigation Satellite System. Location information from the cellular positioning system may be understood as the location information of the first communication node determined by using the cellular positioning system. The cellular positioning system may be a positioning system that uses a cellular network technology.

Location information from the positioning system based on the positioning tag may be understood as the location information of the first communication node determined by using the positioning system based on a positioning tag. The positioning tag, for example, a positioning tag based on radio Frequency Identification (RFID) or a positioning tag based on backscatter technology, may be understood as a preset label for assisting in positioning the first communication node. For example, information such as the communication duration or distance between the first communication node and the positioning tag may be used to determine the location information of the first communication node.

Location information from the wireless router positioning system may be understood as the location information of the first communication node determined by using the related information of a wireless router. Because the location of the Wi-Fi router may be learned by the system, once information of the Wi-Fi router that is seen by the terminal and reported by the terminal is received, the location information of the terminal is able to be estimated. The location information from the Bluetooth positioning system may be understood as the location information of the first communication node determined by using a Bluetooth access point.

Location information from the ultra-wideband positioning system may be understood as the location information of the first communication node determined by using an ultra-wideband access point.

In an embodiment, the data packet including the location information and the timing advance also includes information related to the identity of the first communication node. Such a solution may be applied to IoT applications based on location information, for example, asset tracking, logistics management, and loss prevention of elderly people, children, or pets. In this application scenario, acquisition and utilization of location information typically require prior user consent.

In an embodiment, the data packet including the location information and the timing advance does not include information related to the identity of the first communication node. This solution may be applied to environment sensing based on location information. In such application, what is required is to know the channel through which an electromagnetic signal sent from a certain location passes to reach the base station, not to know who has sent the electromagnetic signal. An important advantage of excluding information related to the identity of the first communication node from the data packet including the location information is that privacy or ethical problems can be avoided. In contrast, if the data packet including the location information also includes information related to the identity of the first communication node, privacy or ethical problems may occur. The terminals of most private users may therefore not want others to know where they are and resist the requirement of "sending private location information". For example, if the function of "sending private location information" is optional, many users disable this function. Alternatively, some terminals use "not sending private location information" as a point of attracting users. Such psychological resistance greatly reduces the number of terminals that provide location information, thus reducing the performance of related solutions that rely on "location and corresponding wireless channel information".

Therefore, this embodiment can avoid privacy or ethical problems caused by location information transmission by terminals, reduce users' worry, significantly increase the number of terminals that can provide location information, and thereby enhance the performance of solutions based on "location and corresponding wireless channel information".

FIG. 3 is another flowchart of information transmission method according to an embodiment. As shown in FIG. 3, the method of this embodiment may be applied to a second communication node (such as a base station). The method includes S210 and S220. For details not exhaustively described in this embodiment, see any previous embodiment.

In S210, a transmission resource is determined.

In S220, the position of the transmission resource is indicated to a first communication node by using target signaling. The transmission resource is configured to be used by the first communication node to transmit a data packet including at least location information and a timing advance.

In this embodiment, the transmission resource may be understood as a common time-frequency resource used by the first communication node in the non-connected state to transmit the data packet including at least the location information and the timing advance. How to determine the transmission resources is not limited here. For example, the transmission resource may be a common channel defined or configured by the second communication node and configured to be used by the first communication node in the non-connected state to transmit the corresponding location information on this common channel.

The target signaling may be understood as signaling for configuring or defining the location of the transmission resource. The target signaling may indicate the location of the transmission resource of the first communication node. The target signaling may be a broadcast signaling defined by the second communication node.

In this embodiment, transmission resource is determined, and target signaling is defined and transmitted to the first communication node to indicate the position of the transmission resource to the first communication node so that the first communication node in the non-connected state can transmit the data packet including at least the location information and the timing advance on the transmission resources, preventing the increase in power consumption caused by repeated interactions for establishing a connection to the second communication node to transmit the data packet by the first communication node.

In an embodiment, the data packet including the location information and the timing advance includes information related to the identity of the first communication node.

In an embodiment, the data packet including the location information and the timing advance does not include information related to the identity of the first communication node.

In an embodiment, the timing advance of signal transmission of the first communication node is determined by a broadcast signal of the second communication node.

In an embodiment, the broadcast signal of the second communication node includes a downlink synchronization signal or a downlink reference signal.

In an embodiment, the broadcast signal of the second communication node includes the location information of the second communication node.

In an embodiment, transmitting the data packet including at least the location information and the timing advance to the second communication node includes receiving, on a predefined common channel, the data packet including at least the location information and the timing advance and transmitted by the first communication node.

In an embodiment, determining the transmission resources includes defining or configuring the transmission resources.

In this embodiment, the second communication node may define or configure a common resource as the transmission resource. The defined or configured transmission resources may be used by multiple first communication nodes in the non-connected state to transmit the data packet including at least the location information and the timing advance.

In an embodiment, the method further includes receiving the data packet including at least the location information and the timing advance and transmitted by the first communication node.

In this embodiment, the first communication node determines the transmission resources according to the target signaling transmitted by the second communication node, selects a time-frequency resource from the transmission resource, and transmits the data packet including at least the location information and the timing advance to the second communication node over the time-frequency resource; and the second communication node receives the data packet including at least the location information and the timing advance and transmitted by the first communication node.

In an embodiment, the data packet is transmitted on the transmission resources.

In an embodiment, receiving the data packet including at least the location information and the timing advance and transmitted by the first communication node includes receiving the data packet transmitted by the first communication node and W pilots transmitted together with the data packet. W is greater than 1.

In this embodiment, the first communication node acquires the corresponding location information and timing advance, determines W pilots, and transmits, together with the W pilots, the data packet including at least the location information and the timing advance to the second communication node; and the second communication node receives the data packet including at least the location information and the timing advance and the W pilots transmitted together with the data packet.

In an embodiment, the W pilots are independent of each other.

In an embodiment, the W pilots are determined by using information in the transmitted data packet.

In an embodiment, the W pilots are determined by using one or more bits in the transmitted data packet.

In an embodiment, each pilot is from a pilot set including M pilots, and each pilot is determined from the pilot set by using log₂ (M) bits in the transmitted data packet.

In an embodiment, at least two of the W pilots are different types of pilot sequences or are from different pilot sets.

In an embodiment, at least two of the W pilots have different lengths.

In an embodiment, U symbols in each of the W pilots are non-zero values. U is greater than 0 and less than 5.

In an embodiment, the value of W is 2.

In an embodiment, receiving the data packet including at least the location information and the timing advance and transmitted by the first communication node includes receiving the data packet transmitted by the first communication node and one pilot transmitted together with the data packet.

In an embodiment, the transmission time interval of the data packet is at least greater than a set threshold.

In an embodiment, the set threshold is in seconds or minutes.

In an embodiment, the method further includes receiving spread symbols transmitted by the first communication node. The spread symbols are symbols obtained by spreading a modulation symbol by using a spreading sequence. The modulation symbol is a symbol formed by encoding and modulating the data packet including at least the location information and the timing advance.

In this embodiment, the first communication node encodes and modulates the data packets including at least the location information and the timing advance to form modulation symbols, spreads each modulation symbol by using a spreading sequence to obtain spread symbols, transmits the spread symbols to the second communication node; and the second communication node receives the spread symbols transmitted by the first communication node.

In an embodiment, the spreading sequence is determined by using information in the transmitted data packet.

In an embodiment, the spreading sequence is from a spreading sequence set including V spreading sequences, and the spreading sequence is determined from the spreading sequence set by using log₂ (V) bits in the transmitted data packet.

In an embodiment, the location information includes at least one of the following: location information from a Global Positioning System, location information from a BeiDou Navigation Satellite System, location information from a cellular positioning system, location information from a positioning system based on a positioning tag, location information from a wireless router positioning system, location information from a Bluetooth positioning system, or location information from an ultra-wideband positioning system.

The following illustratively describes the information transmission method through different embodiments.

### Embodiment one

To allow the terminal (that is, the first communication node) to transmit location information with minimal power consumption and to reduce the system's signaling overheads, when there are no transmission tasks, the terminal may remain in the non-connected state, that is, the RRC idle state or the inactive state, enabling the terminal to enter the deep sleep mode and turn off all transmission-related circuits. When location information (that is, the location information of the first communication node) requires to be sent, the terminal in the non-connected state/RRC idle state/inactive state may initiate the transmission of the location information autonomously (that is, directly transmit the data packet including at least the location information to the second communication node in the non-connected state) without establishing a connection to the system or requesting uplink transmission resources from the base station or the access node (that is, the second communication node) (that is, without getting grant and scheduling of the uplink transmission resources). The terminal completes transmission in the non-connected state, so after the transmission is completed, the terminal does not require to perform the operation of releasing the connection and may immediately enter the non-connected state or the idle state (deep sleep state) that is nearly close to turn-off of the device. This enables highly simplified location information transmission in the non-connected state, effectively reducing the spectral efficiency of the system and the power consumption of the terminal.

The terminal in the non-connected state may autonomously determine when to transmit its private location information and then directly transmit the location information without notifying the base station or the system and without requesting transmission resources from the base station before the transmission. This also means that the base station or system does not require to allocate a dedicated time-frequency resource or a UE-specific time-frequency resource for location information transmission of each terminal. In other words, the base station or system does not require to arrange different time-frequency resources for location information transmission of different terminals. The base station or system only requires to configure one common channel (that is, a common transmission resource). For example, the base station or system configures the common channel by using broadcast information and notifies all terminals to transmit their location information on this common channel. However, since the transmission of location information is initiated by the terminals autonomously, the base station cannot control or know which and how many terminals are involved in each transmission. The base station may only acquire the location information of each terminal by decoding, from the received signal by using the multi-user detection technology, information (that is, the data packet including at least the location information) transmitted by each terminal. The base station may acquire, from the received signal (that is, the data packet including at least the location information) transmitted by each terminal, the location information of each terminal and the corresponding wireless channel information by estimating the wireless channel experienced by the signal of each terminal.

During the transmission of location information in the non-connected state, the base station may receive, on the same time-frequency resource, data packets including at least location information autonomously sent by many terminals. The transmission of these data packets is contention-based, so resource collisions may occur. Especially in a scenario where there are a large number of terminals, the user load is very high, and collisions may be extremely severe, making it a significant challenge for the base station to separate these data packets.

To improve the demodulation performance of location information under high user load, the modulation symbol obtained by encoding and modulating the location information may be transmitted by using the symbol spreading technology. That is, each modulation symbol is spread into L symbols through a spreading sequence of length L (that is, L indicates the length of the spreading sequence). Supposing that the n-th modulation symbol is sₙ, and the spreading sequence of length L is [c₁, c₂, ..., c_{L}]), then after being spread by using the spreading sequence of length L, the n-th modulation symbol becomes L symbols: sₙ*c₁, sₙ*c₂, ..., sₙ*c_{L}. (That is, the data packets including at least the location information are encoded and modulated to form modulation symbols, and each modulation symbol is then spread by the spreading sequence to form spread symbols.) If, in the original transmission without applying the symbol spreading technology, the transmitted information (that is, the transmitted data packets) has a total of N modulation symbols, then the transmitted information becomes N*L pieces by using the symbol spreading technology with the length of the spreading sequence being L. In this manner, the multi-user separation capability in the code domain is able to be provided. Moreover, if each spread symbol is transmitted in the frequency domain, then each modulation symbol has a better diversity effect. If the transmission is in a power-limited scenario and each spread symbol is transmitted in the time domain, each modulation symbol may accumulate L times the energy, and the signal-to-noise ratio may be improved by L times.

In scenarios involving connectionless transmission or schedule-free transmission, reference signals may also be autonomously selected by users. Therefore, it is possible for different users to select the same reference signal, leading to reference signal collisions. When there is high overload, that is, there are many users, the probability of reference signal collisions is very high. Once a reference signal collision occurs, it is difficult for the base station to separate the two users through the reference signals. To reduce collisions and contamination of reference signals while estimating channel and time and frequency offsets, the number of reference signals requires to be doubled, the length of the sequence requires to be doubled, the costs requires to be doubled, and the detection complexity is increased by square. Sparse pilot schemes may increase the number of pilots without increasing pilot resource overheads, thereby reducing the probability of pilot collisions. The base station extracts channel information from data symbols, alleviating the burden of sparse pilots. This means that only partial wireless channel information, rather than the entire wireless channel information, requires to be estimated from sparse pilots. On the other hand, the independent multi-pilot technology refers to the inclusion of two or more pilots in a single transmission (that is, determining W pilots and transmitting the data packet including the location information together with W the pilots to the second communication node, where W is greater than 1). These pilots are unrelated to each other or independent of each other (that is, the W pilots are independent of each other). In this manner, at the same pilot overheads, W independent pilots of different users have a much smaller probability of colliding with each other simultaneously than a single pilot. The base station may use an iterative-based receiver to decode corresponding users from pilots without collisions in each round, reconstruct their data and pilots, and then eliminate them from the received signals. This iterative process continues until all decodable users are decoded. Since the probability of simultaneous collision of multiple independent pilots is much smaller than that of the single pilot, adopting a transmission scheme with multiple independent pilots may support a high user load in contention-based transmission in the non-connected state (or contention-based scheduling-free transmission). In this embodiment, it is possible to combine the independent multi-pilot technology with the sparse pilot technology to reduce user pilot collisions, that is, to use multiple independent and unrelated sparse pilots to enhance the user load.

The terminal should not send location information too frequently, that is, preferably send location information at longer intervals (that is, the transmission time interval of the data packet is at least greater than a set threshold).

The set threshold is in seconds or minutes. For example, the terminal autonomously reports one piece of location information every few minutes (or every few seconds) on average.

To prevent multiple consecutive times of transmission of different terminals from being on the same time-frequency resource, different terminals are preferably different or even random in terms of the time interval between two times of transmission. This may be implemented by the terminals that randomly determine the transmission time. The terminal autonomously determines the time-frequency resource for transmission. For example, the terminal autonomously determines the positions of the time-frequency resource according to a random number generator. Different terminals have random number generators with different structures or have different initial seeds, thereby achieving a certain level of randomness.

In an embodiment, the system defines or configures a common channel (that is, a transmission resource). The terminal in the non-connected state/RRC idle state/inactive state transmits the location information and the timing advance on this channel. Then broadcast signaling (that is, target signaling) is defined to indicate the locations and the timing advance of the time-frequency resource of the channel. In practice, the base station notifies, by using the broadcast signaling, the locations and the timing advance of the time-frequency resource used for information transmission (that is, the second communication node indicates the locations and the timing advance of the time-frequency resource to the first communication node by using the target signaling).

In an embodiment, the terminal in the non-connected state/RRC idle state/inactive state directly transmits the data packet including at least the location information and the timing advance to the base station/access point (without entering the connected state or requesting resources from the base station before the transmission).

For each transmission, the terminal autonomously determines the transmission resources, that is, selects a time-frequency resource from the common transmission resources. Typically, this selection is made from the system-defined common time-frequency resources. The terminal independently determines one of these time-frequency resources for the transmission of the data packet. (That is, the terminal selects the time-frequency resource from the transmission resources and uses the selected resource to transmit the data packet including at least the location information and the timing advance to the second communication node. )

The terminal transmits the data packet including the location information and the timing advance by using the independent multi-pilot technology or the sparse pilot technology in the following manner: the transmission information (that is, the data packet) includes location information and timing advance; the pilots are selected based on the transmission information; and the pilots may be multiple independent pilots, sparse pilots, or multiple independent sparse pilots (that is, determining W pilots and transmitting the data packet including the location information together with the W pilots to the second communication node, where W is greater than 1).

The terminal transmits the data packet at a sparse frequency, for example, once every tens of seconds, once every few minutes, or less than 100 times every hour (that is, the transmission time interval of the data packet is at least greater than a set threshold, and the set threshold is in seconds or minutes).

Transmitting the data packets including at least the location information and the timing advance by using the symbol spreading technology means encoding and modulating the data packets including at least the location information and the timing advance to form modulation symbols and spreading each modulation symbol into L symbols by using a spreading sequence of length L (that is, encoding and modulating the data packets including at least the location information and the timing advance to form modulation symbols, spreading each modulation symbol by using a spreading sequence to obtain spread symbols, and transmitting the spread symbols to the second communication node).

The location information includes at least one of the following: location information from a Global Positioning System, location information from a BeiDou Navigation Satellite System, location information from a cellular positioning system, location information from a positioning system based on a positioning tag, location information from a wireless router (Wi-Fi router) positioning system, location information from a Bluetooth positioning system, or location information from an ultra-wideband positioning system. Location information from the wireless router (Wi-Fi router) positioning system, location information from the Bluetooth positioning system, and location information from the ultra-wideband positioning system are more advantageous for acquiring the location information of an indoor terminal.

Embodiment two: The following describes an example using multiple independent pilots.

In the present application, the first communication node transmits the data packet including at least the location information and the timing advance in the non-connected state. Since there is no central node to coordinate the pilots used by different terminals, it is possible for different terminals to autonomously select the same pilot from a preset pilot set containing a limited number of pilots, which is known as the pilot collision problem. In a high-overload scenario where there are many access terminals, the probability of pilot collisions is relatively high. Once pilots of different terminals collide, it is difficult for the base station to demodulate the data packets of these terminals through the pilots. Therefore, if pilot collisions are not handled properly, the performance in transmitting the location information and the timing advance in the non-connected state deteriorates significantly. Using the related pilot scheme to implement transmission of the location information and the timing advance in the non-connected state results in a higher probability of pilot collisions.

FIG. 4 is a diagram illustrating an implementation of transmitting a data packet according to a pilot scheme according to an embodiment. As shown in FIG. 4, one transmission may include pilots/reference signals, and data packets. The pilots or reference signals may be considered as preambles or demodulation reference signals (DMRSs). The position of a pilot may be in the front or middle of a data packet (the payload/message of FIG. 4). One feature of the pilot scheme is that each transmission includes a single pilot or reference signal or a single type of pilot or reference signal. Here, the single or the single type means that the pilot/pilots is/are composed of one sequence or multiple associated sequences.

For example, the transmission includes one preamble sequence or multiple associated preamble sequences. For example, the transmission may include two preambles [P1, P2], but the two preambles are formed by repetition of one preamble sequence P, that is, P1 = P2 = P. Such a preamble scheme may be used for time and frequency offset estimation.

FIG. 5A is a diagram illustrating an implementation of a pilot scheme according to an embodiment. As shown in FIG. 5A, the transmission may include a pilot formed by one preamble sequence.

FIG. 5B is another diagram illustrating an implementation of a pilot scheme according to an embodiment. As shown in FIG. 5B, the transmission may include two preambles [P1, P2], where [P1, P2] is generated from repetition of a single preamble sequence P by using Orthogonal Cover Code (OCC) weighting, that is, P1 = P, and P2 = P; or P1 = P, and P2 = -P. Alternatively, the transmission may include two preambles [P1, P2], where [P1, P2] is generated from repetition of a single preamble sequence P by using other weighting methods, for example, P1 = αP, and P2 = βP. α and β are weighted values. For example, the OCC weighting is a special case where [α, β] = [1, 1] or [1, -1]. Such a preamble scheme may increase the number of preambles but may compromise the orthogonality of the pilots.

Similarly, when DMRS is used as an example, the transmission may include one DMRS or multiple associated DMRSs.

For example, there may be two DMRSs [P1, P2]. However, the two DMRSs are generated from repetition of a single DMRS sequence, that is, P1 = P2 = P. Alternatively, the two DMRSs are generated from repetition of a single DMRS sequence by using OCC weighting, for example, P1 = P2 = P; or P1 = P, and P2= -P. Alternatively, the two DMRSs are generated from repetition of a single DMRS sequence by using other weighting methods, for example, P1 = αP, and P2 = βP. α and β are weighted values, for example, OCC weighting, that is, [α, β] = [1, 1] or [1, -1].

In some solutions, preambles and DMRSs are included at the same time. In this case, preambles and DMRSs may have the preceding features. In addition, preambles are associated with DMRSs. Generally, when the preambles are determined, the corresponding DMRSs are determined.

However, because pilot overheads are limited, the number (N) of pilots included in the pilot set is generally not very large, for example, N = 64. In related solutions, each transmission includes a single pilot or reference signal or a single type of pilot or reference signal. In a transmission scenario in the non-connected state, if a large number of terminals perform transmission at the same time, the collision probability is relatively high. For example, when N = 64, the collision probability between any two terminals is 1/64. If a large number of terminals perform transmission at the same time, the collision probability is far greater than 1/64.

In the non-connected state, the data packet including at least the location information and the timing advance is transmitted to the second communication node. One transmission includes two or more pilots. The pilots are independent of each other or uncorrelated/unrelated with each other. In other words, pilot signals in one transmission are formed by two or more pilot sequences independent of each other or uncorrelated/unrelated with each other (that is, determining W pilots and transmitting the data packet including the location information together with the W pilots to the second communication node, where W is greater than 1).

FIG. 6A is a diagram illustrating an implementation of transmitting a data packet based on pilots according to an embodiment. As shown in FIG. 6A, in the non-connected state, the data packet including at least the timing advance and the location information of the first communication node is transmitted to the second communication node, and pilot signals in one transmission are formed by two pilot sequences independent of each other or uncorrelated/unrelated with each other (that is, preambles P1 and P2).

FIG. 6B is another diagram illustrating an implementation of transmitting a data packet based on pilots according to an embodiment. As shown in FIG. 6B, in the non-connected state, the data packet including at least the timing advance and the location information of the first communication node is transmitted to the second communication node, and pilot signals in one transmission are formed by W pilot sequences independent of each other or uncorrelated/unrelated with each other (that is, preambles P1, P2, ..., Pw).

The data packet including at least the timing advance and the location information of the first communication node and transmitted with the pilots includes information about multiple pilots that are independent of each other. The information includes, for example, the indexes of the pilots in the pilot set or the initial state in pilot generation. In this manner, once the data packet of the terminal is decoded successfully, information about all pilots used in this transmission of the terminal is known, and then all pilots are able to be reconstructed so that interference cancellation of the pilot signals can be performed (that is, the W pilots are determined by using information in the transmitted data packet).

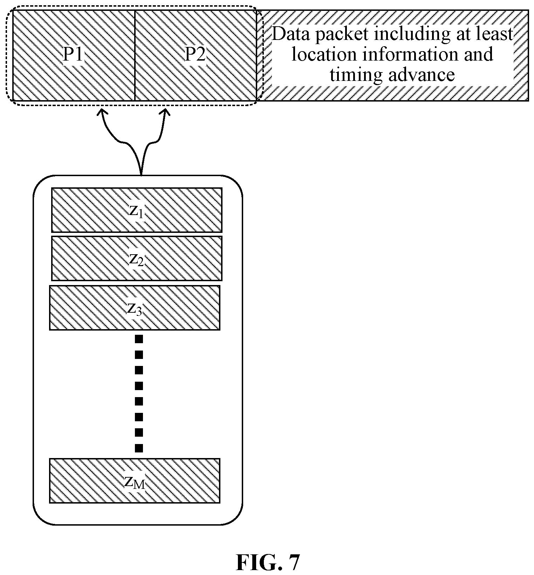

FIG. 7 is another diagram illustrating an implementation of a pilot scheme according to an embodiment. As shown in FIG. 7, P1 and P2 are both selected from a pilot set Z including M pilot sequences (that is, each pilot is from the pilot set including M pilots, and each pilot is determined from the pilot set by using log₂ (M) bits in the transmitted data packet). The pilot set Z includes M pilot sequences: z₁, z₂, ..., z_{M}.

For example, P1 and P2 selected from Z by the first communication node such as the terminal are independent of each other or unrelated/unrelated with each other. If M = 2^m (the mth power of 2), m bits are required for determination of a sequence from Z, that is, a sequence may be selected from Z by using the m bits as an index. Therefore, the terminal requires m bits to select P1 from Z and requires other m bits to select P2. The m bits required for selection of P1 is independent of the m bits required for selection of P2.

In an embodiment, P1 and P2 may be determined separately by using two groups of m bits in the data packet (that is, the W pilots are determined by using one or more bits in the transmitted data packet). In this manner, once the data packet of the terminal is decoded correctly, the receiver (that is, the second communication node) may know P1 and P2 used by the terminal so that interference cancellation of the pilot signals can be performed.

For example, when M = 64, the terminal may determine P1 by using six bits (that is, log₂ (M) = 6) in the data packet of the terminal and determine P2 by using other six bits in the data packet. P1 and P2 are separately determined by using 2m bits in the data packet, and information indicating the preamble sequences may not be added to the data packet, thereby saving overheads. Alternatively, the terminal may determine P1 by using six bits or values [1, 64] (integers from 1 to 64) generated from several bits in the data packet of the terminal according to a rule; and determine P2 by using six bits or values [1, 64] (integers from 1 to 64) generated from other several bits in the data packet of the terminal according to a rule. In this manner, information indicating the preamble sequences may not be added to the data packet, thereby saving overheads.

It is also possible to generate P1 and P2 by using additional 2m bits. However, the additional 2m bits require to be placed in the data packet. As a result, the data packet has additional 2m bits, reducing the transmission efficiency.

Alternatively, as shown in FIG. 7, the system defines a sequence generation method for generating M preamble sequences. The method is used for generating M preamble sequences according to a Zadoff-Chu sequence (ZC sequence) generation formula by setting the values of the two variables "root" and "cyclic shift" in the ZC sequence formula.

The "cyclic shift" for generation of P1 is independent of the "cyclic shift" for generation of P2.

Alternatively, the "root" and "cyclic shift" for generation of P1 are independent of the "root" and "cyclic shift" for generation of P2.

Alternatively, as shown in FIG. 7, the system defines a method for generating N preamble sequences. The method is used for generating N preamble sequences by a shift register sequence generator by setting different "initial states" of the shift register sequence generator. The "initial state" of P1 may be independent of the "initial state" of P2.

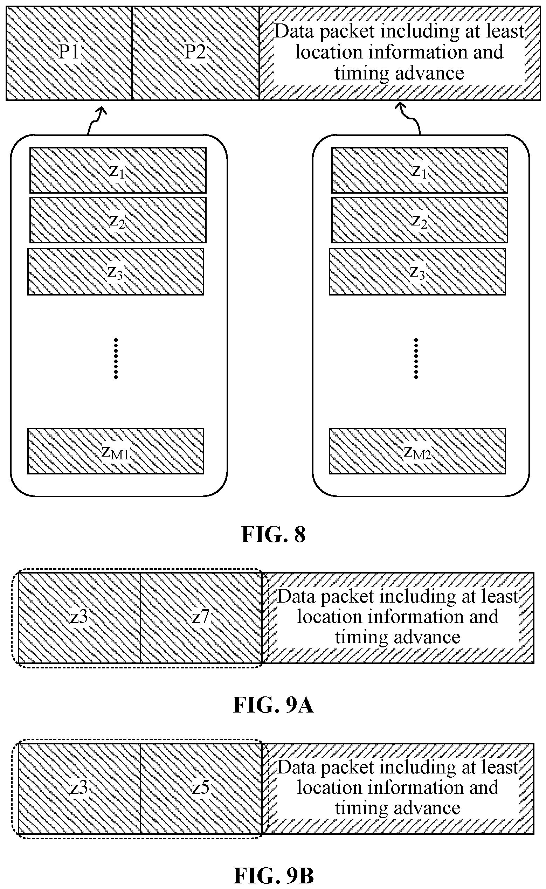

FIG. 8 is another diagram illustrating an implementation of a pilot scheme according to an embodiment. As shown in FIG. 8, the system defines a sequence generation method for generating M1 preamble sequences and a sequence generation method for generating M2 preamble sequences. A pilot set/pilot pool including M1 pilot sequences is denoted as Z1. Z1 includes M1 preamble sequences: z₁, z₂, ..., z_{M1}. A pilot set/pilot pool including M2 pilot sequences is denoted as Z2. Z2 includes M2 preamble sequences: z₁, z₂, ..., z_{M2}. P1 and P2 are generated by using the two sequence generation methods, but the generation of P1 is independent of the generation of P2 (that is, at least two of the W pilots are from different pilot sets).

The sequence generation method for generating M1 preamble sequences generates M1 preamble sequences by using a ZC sequence formula (that is, formula 1). The sequence generation method for generating M2 preamble sequences generates M2 preamble sequences by using another ZC sequence formula (that is, formula 2). Both of the two methods are used for generating preamble sequences by setting the values of the two variables "root" and "cyclic shift" in the ZC sequence formula.

Therefore, the "cyclic shift" of P1 and the "cyclic shift" of P2 may be independent of each other.

Alternatively, the "root" and "cyclic shift" of P1 and the "root" and "cyclic shift" of P2 are independent of each other.

For another example, the system defines a method for generating M1 preamble sequences by using a shift register sequence generator 1, and the system defines a method for generating M2 preamble sequences by using a shift register sequence generator 2. Both of the two methods are used for generating preamble sequences by a shift register sequence generator by setting different "initial states" of the shift register sequence generator.

The "initial state" of P1 may be independent of the "initial state" of P2.

For another example, the system defines a sequence set 1 including M1 preamble sequences and a sequence set 2 including M2 preamble sequences. P1 is selected from the sequence set 1, and P2 is selected from the sequence set 2. The indexes 1 of P1 selected from the sequence set 1 are independent of the indexes 2 of P2 selected from the sequence set 2.

The length of a pilot in the sequence set 1 including M1 preamble sequences may be the same as or different from the length of a pilot in the sequence set 2 including M2 preamble sequences (at least two of the W pilots are different).

In an embodiment, in the non-connected state, the data packet including at least the timing advance and the location information of the first communication node is transmitted to the second communication node.

One transmission includes W pilots. The W pilots are independent of each other or uncorrelated/unrelated with each other. Here the W pilots may be one of the following: W physical random access channel (PRACH) preamble sequences defined by the long-term evolution (LTE) standard; W PRACH preamble sequences defined by the New Radio (NR) standard; W DMRS sequences defined by the LTE standard; W DMRS sequences defined by the NR standard; W maximum-length shift-register (MLSR) sequences; W discrete Fourier transform (DFT) sequences; or W Walsh-Hadamard sequences.

W sequences unassociated with each other/generated independently of each other are used as preambles so that the possibility of collisions is relatively small. FIG. 9A is another diagram illustrating an implementation of a pilot scheme according to an embodiment. As shown in FIG. 9A, W = 2, and the two pilot sequences selected by the terminal 1 are z3 and z7. FIG. 9B is another diagram illustrating an implementation of a pilot scheme according to an embodiment. As shown in FIG. 9B, W = 2, and the two pilot sequences selected by the terminal 2 are z3 and z5. It can be seen that both the first preamble sequence P1 of the terminal 1 and the first preamble sequence P1 of the terminal 2 are z3. That is, the first preamble sequence P1 of the terminal 1 collides with the first preamble sequence P1 of the terminal 2. However, the second preamble sequence P2 of the terminal 1 and the second preamble sequence P2 of the terminal 2 are z7 and z5 respectively, that is, are different from each other.

The receiver may perform channel estimation by using the second preamble sequences that do not collide with each other to demodulate the data packet of the terminal 1 and the data packet of the terminal 2.

The independent multi-pilot technology refers to the inclusion of two or more pilots in a single transmission. These pilots are independent of each other/unassociated with each other/unrelated with each other. In this manner, at the same pilot overheads, multiple independent pilots of different users have a much smaller probability of colliding with each other simultaneously than that of a single pilot. The base station may use an iterative-based receiver to decode corresponding data packets of the terminals from pilots without collisions in each round, reconstruct their data and pilots, and then eliminate them from the received signals. This iterative process continues until all decodable data packets of the terminals are decoded. Since the probability of simultaneous collision of multiple independent pilots is much smaller than that of a single pilot, adopting a transmission scheme with multiple independent pilots can support a high terminal load transmission in the non-connected state.

Embodiment three: The following describes an example using sparse pilots.

To reduce pilot collisions, as many pilots as possible may be defined, that is, as many pilots as possible are included in the pilot set. Increasing the number of pilots means increasing the overheads of the pilots. On the other hand, pilots are required for channel estimation and time offset/frequency offset estimation to complete related demodulation of data symbols. Therefore, each reference signal is required to occupy sufficient resources such that reference signals cover the entire transmission bandwidth and duration. In other words, the reference signals are required to be not too sparse in the entire transmission bandwidth and duration and are required to be dense to a certain degree in the entire transmission bandwidth and duration, so that a wireless multipath channel (that is, a frequency selective channel) in the entire transmission bandwidth and a frequency offset in the transmission duration can be estimated. Therefore, to ensure the transmission performance in the non-connected state, if the related pilot scheme is used, overheads occupied by the pilots increase by multiple times, and the detection complexity increases significantly.

A demodulation reference signal (DMRS) set including 12 reference signals is defined. A demodulation reference signal may also be referred to as a demodulation reference signal port. That is, a set including 12 DMRS ports is defined.

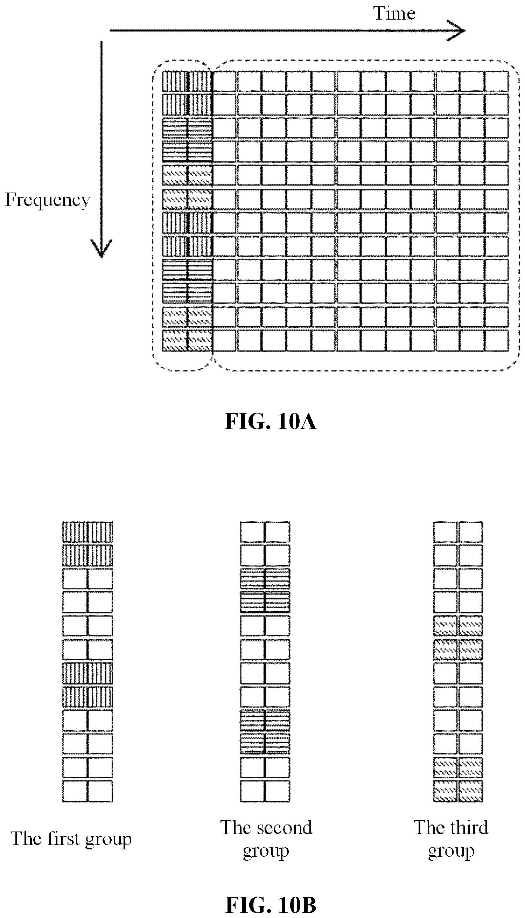

FIG. 10A is a diagram illustrating an implementation of a defined physical resource block according to an embodiment. As shown in FIG. 10A, a defined physical resource block (PRB) includes 14 OFDM symbols ( DFT-S-OFDM symbols, or SC-FDMA symbols) in the time domain and 12 subcarriers in the frequency domain. Here OFDM is short for orthogonal frequency-division multiplexing, DFT-S-OFDM is short for discrete Fourier transform spread orthogonal frequency division multiplexing, and SC-FDMA is short for single-carrier frequency-division multiple access. Each square of the grid is a subcarrier of an OFDM symbol, also referred to as a resource element (RE). That is, one physical resource block (PRB) shown in FIG. 10A includes a total of 12*14 = 168 resource elements (REs). The first two OFDM symbols are used to carry the DMRSs. That is, the first two OFDM symbols are used as a DMRS area. That is, the resource overheads occupied by the DMRS are 1/7. An area other than the DMRS area is a data symbol area.

FIG. 10B is a diagram illustrating an implementation of a defined demodulation reference signal according to an embodiment. As shown in FIG. 10B, the DMRSs may be divided into three groups according to the RE locations they occupy. Non-zero symbols (also referred to as non-zero signals or useful signals) (that is, the symbols are non-zero values) in the first group are carried by the patterned REs shown in the figure. The four DMRS ports in the first group are differentiated from each other by using OCC codes. Non-zero symbols in the second group are carried by the patterned REs shown in the figure. The four DMRS ports in the second group are differentiated from each other by using OCC codes. Non-zero symbols in the third group are carried by the patterned REs shown in the figure. The four DMRS ports in the third group are differentiated from each other by using OCC codes. Each demodulation reference signal has a value of 0 on the non-patterned REs shown in the figure. In other words, there is no signal on the non-patterned REs shown in the figure. It can be seen that for each demodulation reference signal, not all REs in the demodulation reference signal area have signals. However, for a terminal, as long as the terminal uses one reference signal/one reference signal port, even though there is no signal on some REs of the DMRS area for this reference signal port, the terminal cannot use these REs to transmit data. From this perspective, the resource overheads occupied by one reference signal/one reference signal port are also 1/7.

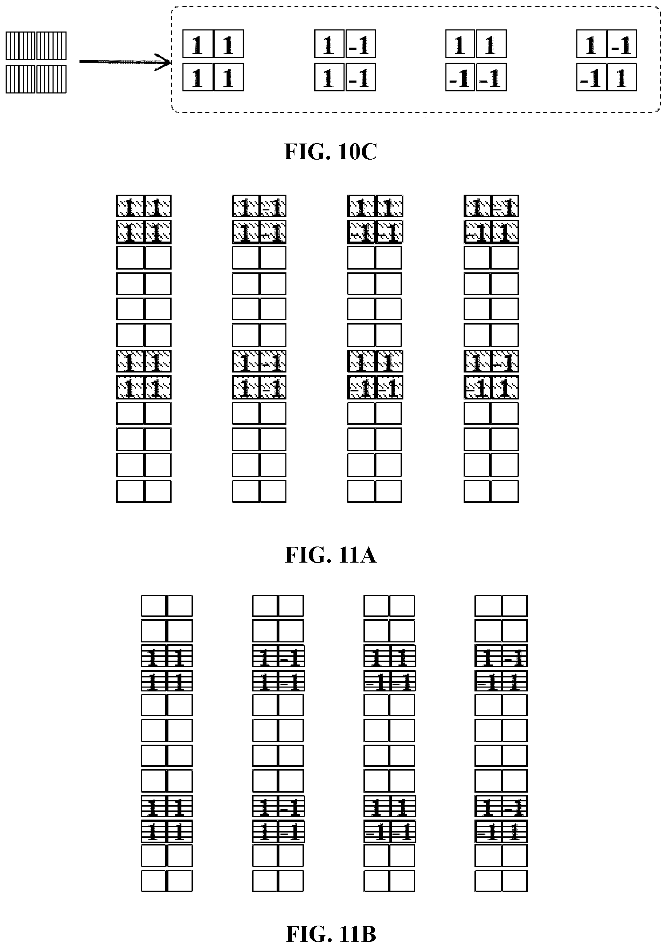

The non-zero symbols of demodulation reference signals in the same group are carried by the same REs and are differentiated from each other only by using non-zero symbols having different values. Generally, different reference signal ports cmay be differentiated from each other by using time-domain OCC codes and frequency-domain OCC codes. FIG. 10C is another diagram illustrating a implementation of a defined demodulation reference signal according to an embodiment. As shown in FIG. 10C, for example, four demodulation reference signal ports in the first group in FIG. 10B are differentiated from each other by jointly using length-2 OCC codes [1, 1] and [1, -1] in the time domain and length-2 OCC codes [1, 1], and [1, -1] in the frequency domain. That is, in each group of DMRS ports, different DMRS ports are generated by carrying different OCC codes on the patterned REs. The same goes to the four reference signals in the second group and the four reference signals in the third group in FIG. 10B. In this manner, a total of 12 demodulation reference signals, that is, 12 demodulation reference signal ports, of the defined DMRS set are obtained.

FIG. 11A is a diagram illustrating an implementation of a defined demodulation reference signal by using an OCC according to an embodiment. As shown in FIG. 11A, for example, four demodulation reference signal ports in the first group in FIG. 10B are differentiated from each other by jointly using length-2 OCC codes [1, 1] and [1, -1] in the time domain and length-2 OCC codes [1, 1], and [1, -1] in the frequency domain.

FIG. 11B is another diagram illustrating a implementation of a defined demodulation reference signal by using an OCC according to an embodiment. As shown in FIG. 11B, for example, four demodulation reference signal ports in the second group in FIG. 10B are differentiated from each other by jointly using length-2 OCC codes [1, 1] and [1, -1] in the time domain and length-2 OCC codes [1, 1], and [1, -1] in the frequency domain.

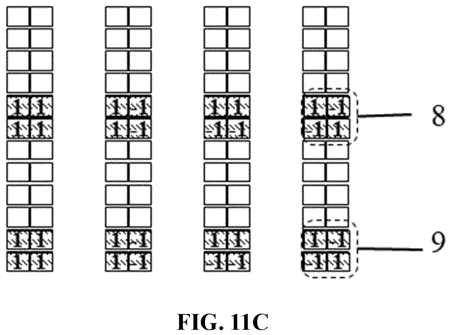

FIG. 11C is another diagram illustrating a implementation of a defined demodulation reference signal by using an OCC according to an embodiment. As shown in FIG. 11C, 8 indicates the first reference signal element, and 9 indicates the second reference signal element. Four demodulation reference signal ports in the third group in FIG. 10B are differentiated from each other by jointly using length-2 OCC codes [1, 1] and [1, -1] in the time domain and length-2 OCC codes [1, 1], and [1, -1] in the frequency domain.

In the present application, reference signals carried by several adjacent REs in the time and frequency domains may be referred to as a reference signal element (RSE). For example, in FIGS. 10A to 10C and FIGS. 11A to 11C, reference signals carried by four consecutive REs in the time and frequency domains may be referred to as an RSE. Reference signals on a patterned square composed of four sub-squares constitute an RSE. From the perspective of channel estimation, an RSE has another feature in addition to being composed of adjacent resource elements in the time/frequency domain: Each RSE may be used for estimation of one channel value when the reference signals are used for channel estimation.

According to this definition, as shown in FIG. 10A, FIG. 10B, FIG. 10C, FIG. 11A, FIG. 11B, and FIG. 11C, in the defined DMRS set, each reference signal has two RSEs in one PRB bandwidth. Thus, channel values at two places within one PRB bandwidth (that is, within a 12-subcarrier bandwidth) may be estimated. The channel values of the 12 subcarriers in one PRB bandwidth require to be obtained by interpolating the estimated values of these RSEs.

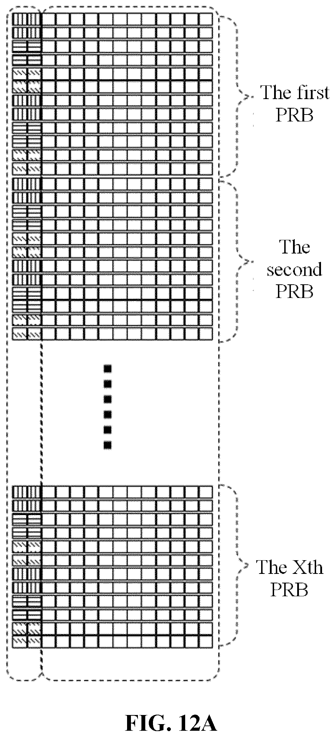

FIG. 12A is a diagram illustrating an implementation of PRB-based transmission according to an embodiment. As shown in FIG. 12A, if one transmission includes X PRBs, then the 12 demodulation reference signals (or 12 demodulation reference signal ports) of the reference signal set are shown in the figure. Each reference signal has 2*X RSEs, and channel values at 2*X places equally spaced in the entire transmission bandwidth may be estimated, and then the channel values of all of the 12*X subcarriers in the transmission bandwidth are obtained by interpolation.

The 12 DMRSs can be divided into three groups according to the RE locations they occupy.

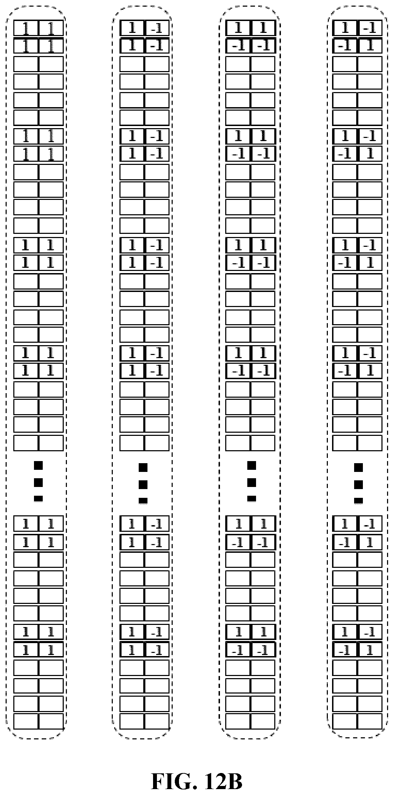

FIG. 12B is another diagram illustrating an implementation of a defined demodulation reference signal according to an embodiment. As shown in FIG. 12B, the four demodulation reference signals in the first group are differentiated from each other by using OCC codes.

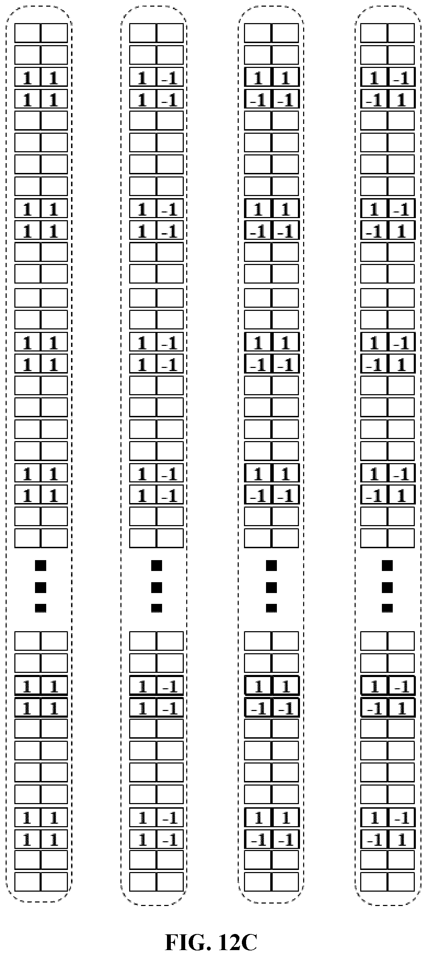

FIG. 12C is another diagram illustrating an implementation of a defined demodulation reference signal according to an embodiment. As shown in FIG. 12C, the four demodulation reference signals in the second group are differentiated from each other by using OCC codes.

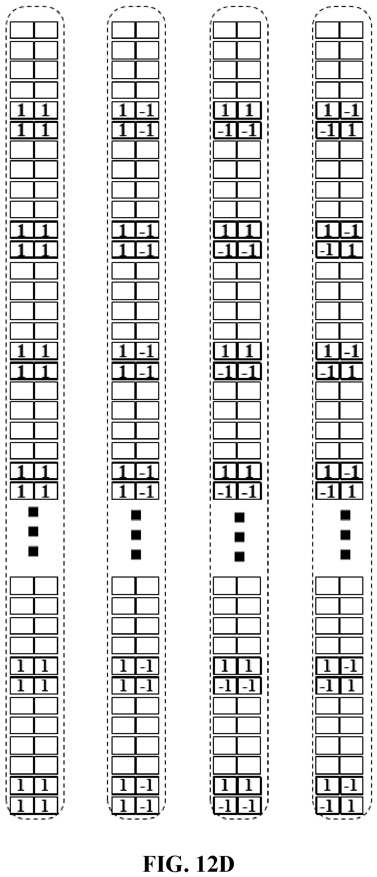

FIG. 12D is another diagram illustrating an implementation of a defined demodulation reference signal according to an embodiment. As shown in FIG. 12D, the four demodulation reference signals in the third group are differentiated from each other by using OCC codes.

It can be seen that to estimate the channels in the entire transmission bandwidth of each access terminal, the related demodulation reference signals (or pilots) occupy a relatively large number of resources, or the demodulation reference signals are required to be dense to a certain degree in the entire transmission bandwidth and cannot be too sparse. In FIG. 10A, FIG. 10B, FIG. 10C, FIG. 11A, FIG. 11B, FIG. 11C, and FIGS. 12A to 12D, the density of the demodulation reference signals in the entire transmission bandwidth is 2 reference signals per PRB or 2 RSEs per PRB.

For the system, the overheads of the reference signals are 1/7, that is, the system pays 1/7 resources for the design of only 12 demodulation reference signals. For data transmission in the non-connected state, the collision probability of the reference signals autonomously selected by any two terminals is 1/12. This probability is large. Therefore, the number of terminals for data transmission in the non-connected state is severely limited by related demodulation reference signals.

If frequency offset estimation is required for the reference signals, the resources occupied by the reference signals are required to increase, in other words, the reference signals are required to be denser among the transmitted signals. For example, repetition is made in the time domain so that frequency offset estimation may be performed. In this manner, resources occupied by the reference signals are doubled, that is, the overheads are 2/7. That is, the system pays 2/7 resources for the design of only 12 demodulation reference signals to estimate the frequency-selective channels and frequency offset. If the system requires to cope with a certain time offset, resources occupied by the reference signals are required to increase. For example, an overhead of 3/7 or even 4/7 is required to design 12 demodulation reference signals. With such a large overhead, only a set of a small number of reference signal (or a small number of reference signal ports) is obtained, so the collision probability in transmission in the non-connected state is very high.

If the multi-path channel changes more quickly in the frequency domain, that is, the frequency-selectivity is more noticeable, to ensure the precision of channel estimation, the density of the demodulation reference signals in the frequency domain is required to increase, that is, demodulation reference signals with a higher density in the frequency domain are required. Each demodulation reference signal has three RSEs (three squares, each composed of four sub-squares) in each PRB bandwidth. In this manner, each PRB has three estimated values, and X PRBs have 3*X estimated values. Then, channels of all subcarriers of the X PRBs are obtained by linear interpolation. This type of reference signals still occupy 1/7 overheads of the transmission resources. However, only eight demodulation reference signals (eight demodulation reference signal ports) are obtained, less than that defined above. It can be seen that the channel estimation capability is generally inversely proportional to the number of reference signals.

Therefore, when the reference signals are applied to a non-connected transmission scenario, the root of the problem is that the task or responsibility of the reference signals is too heavy: The reference signals are required to estimate frequency-selective channels of the entire transmission channels and time and frequency offsets and to perform terminal user identification. Therefore, the reference signals require a relatively large number of time-frequency resources to complete such a heavy task. This causes a serious shortage of reference signals under certain resources. However, the number of terminals that may be supported in transmission in the non-connected state is limited by the number of reference signals.

A main starting point of the present application is to greatly reduce the task of the reference signals. Therefore, the resources occupied by the reference signals may be minimized, or the reference signals may be sparse. In this manner, the number of reference signals may be maximized, and both preconfigured scheduling-free transmission and contention-based scheduling-free transmission may support more terminals.

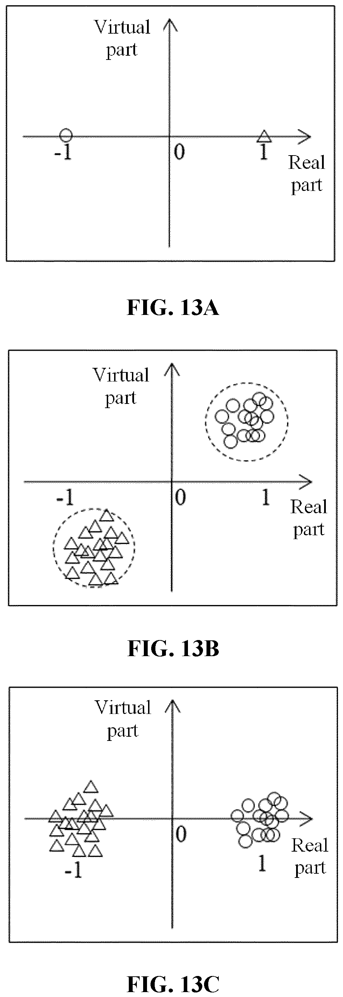

In the present application, the data-based channel estimation technology (not using the reference signals) is used to estimates the channels of the entire transmission bandwidth and estimates time and frequency offsets by using the characteristics of the data, such as the geometric characteristics of the constellation diagram of the data symbols. That is, it is no longer necessary to estimate the channels in the entire transmission bandwidth and time and frequency offsets by using the reference signals. Channel estimation is used as an example. To simplify description, a block flat fading channel is used as an example. FIG. 13A is a diagram of a BPSK symbol according to an embodiment. FIG. 13A shows a constellation diagram of a binary phase-shift keying (BPSK) symbol transmitted by a terminal, which may be a standard BPSK constellation diagram. FIG. 13B is another diagram of a BPSK symbol according to an embodiment. FIG. 13C is another diagram of a BPSK symbol according to an embodiment. As shown in FIG. 13B, after the BPSK symbol passes through the wireless channel and wireless receiver and then reaches the base station, the BPSK constellation diagram is no longer a standard BPSK constellation diagram as shown in FIG. 13A. Instead, a weighting factor is applied by the wireless channel, that is, rotation, scaling, and additive white Gaussian noise (AWGN) are added so that scattered symbol spots are obtained. FIG. 13B shows scattered symbol points corresponding to the channel-weighted symbol. Channel weighting may be estimated by using the geometric shape of the scattered symbol points.

It can be seen that for a low-order modulation signal like BPSK, the constellation diagram after rotation and scaling (that is, channel weighting) still has strong geometric characteristics. Therefore, in channel estimation and equalization, these geometric characteristics may be used to estimate the rotation amount and the scaling amount, and then the constellation diagram may be inversely rotated to its original. Thus, as shown in FIG. 13C, equalization is achieved, and thus signal-equalized scattered symbol points are obtained. As shown in FIG. 13B, the scattered points corresponding to the symbol received by the base station are two distinct clusters. It is feasible for the base station to sum up the circular scattered points and the triangular scattered points respectively to obtain two point centers. Then, by rotating the center of the triangular scattered points by 180° and summing up the rotated center of the triangular scattered points and the center of the circular scattered points, the base station obtains channel weighting of the BPSK symbol expressed in the form of a complex number and obtains the rotation amount and the scaling amount. The angle of the complex number is the rotation amount. The modulus of the complex number is the scaling amount.

Therefore, in the solution of the present application, the task of the reference signals is much smaller than that of the related solution; therefore, the resources occupied by each reference signal are much fewer than those of the related solution. Therefore, at certain overheads, the number of reference signals of the present application is much greater than that of the related solution.

On the other hand, when the base station has multiple receiving antennas, for example, R receiving antennas, a strong spatial-domain capability may be provided in theory to improve the performance of multi-terminal access. To get this spatial-domain capability, the present application proposes that the spatial-domain channels hₖ = [hₖ₁, hₖ₂, ..., and h_{kR}]^{t} experienced by the signals of the terminals may be estimated by using the "extremely sparse" reference signals. Here t is a transpose operator. These estimated spatial-domain channels are then used for spatial-domain combination of the received signals. The spatial-domain combination of the signals of terminal k is sₖ = hₖ'*y. Here, y = [yₖ₁, yₖ₂, ..., and y_{kR}]^{t} are received signals of R receiving antennas, and hₖ' is a conjugate transpose of hₖ. Then the receiver estimates, by using the data symbol sₖ obtained after the spatial-domain combination, the entire transmission bandwidth channel experienced by the signals of the terminal k and the time and frequency offsets. Then, channel compensation and time and frequency offsets compensation are performed on the data symbol sₖ obtained after the spatial-domain combination. Finally, demodulation and decoding are performed on the data symbol that has experienced channel compensation and time and frequency offsets compensation.

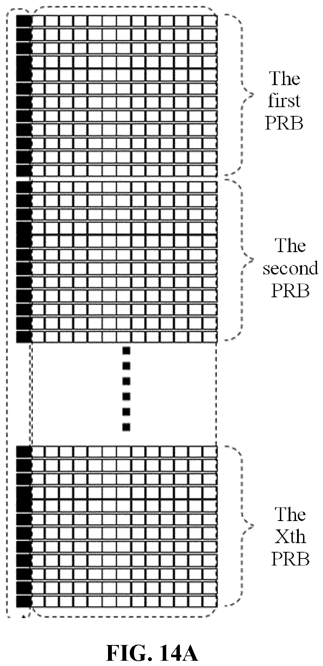

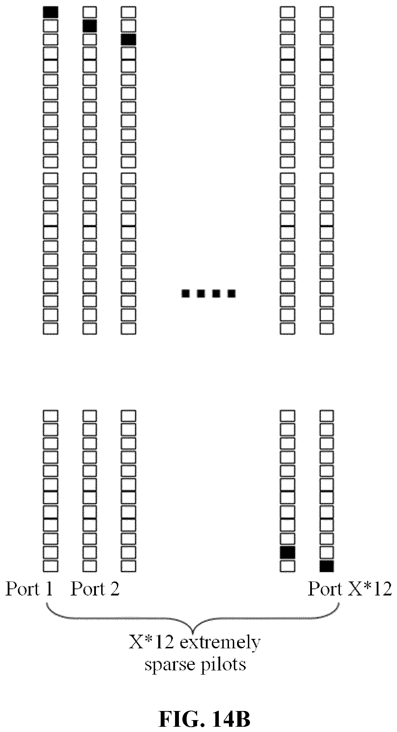

Therefore, the present application does not require reference signals to estimate channels in the entire transmission bandwidth and the time and frequency offsets. FIG. 14A is a diagram illustrating an implementation of a defined reference signal according to an embodiment. As shown in FIG. 14A, the reference signals of the present application occupy one OFDM symbol. One transmission includes the time-frequency resources of X PRBs. One physical resource block (PRB) includes 14 OFDM (or DFT-S-OFDM or SC-FDMA) symbols in the time domain and 12 subcarriers in frequency domain. The first OFDM symbol is used to carry the demodulation reference signals, that is, the first OFDM symbol is used as an extremely sparse pilot area. 1/14 of the resources are used to transmit the reference signals, that is, 12*X REs are used to transmit the reference signals. An area other than the extremely sparse pilot area is a data symbol area. FIG. 14B is another diagram illustrating an implementation of a defined reference signal according to an embodiment. As shown in FIG. 14B, each reference signal defined by the system has non-zero symbols (non-zero signals or useful signals) on only one RE. The rest has no signal (has a value of 0). In this manner, the reference signal area occupying an overhead of 1/14 may obtain 12*X reference signals. If there are 6 PRBs and an overhead of 1/14, 6*12 = 72 reference signals may be obtained, far greater than 8 or 12 of the NR system. (This type of reference signals still occupy 1/7 overheads of the transmission resources).

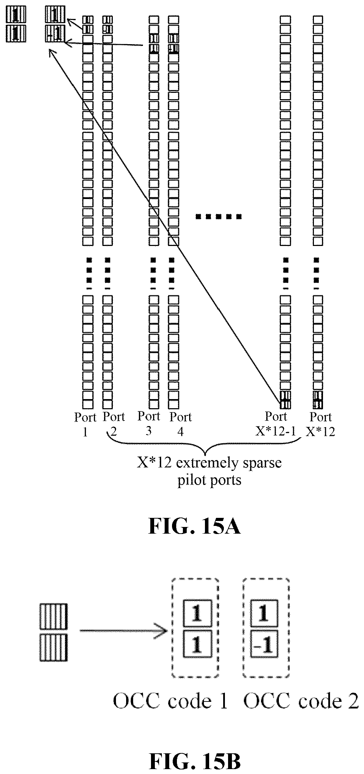

FIG. 15A is another diagram illustrating an implementation of a defined reference signal according to an embodiment. As shown in FIG. 15A, each reference signal defined by the system has non-zero symbols (non-zero signals or useful signals) on only two REs. Each two REs obtain two reference signals by using a length-2 OCC. The rest has no signal (has a value of 0). In this manner, the reference signal area occupying an overhead of 1/14 may obtain 12*X reference signals. If there are 6 PRBs and an overhead of 1/14, 6* 12 = 72 reference signals may be obtained, far greater than 8 or 12 of the NR system. The number of extremely sparse pilots is proportional to the number of PRBs.

FIG. 15B is a diagram illustrating an implementation of generating a DMRS port according to an embodiment. As shown in FIG. 15B, different OCC codes (such as OCC code 1 and OCC code 2) are carried by two patterned REs to generate different DMRS ports.

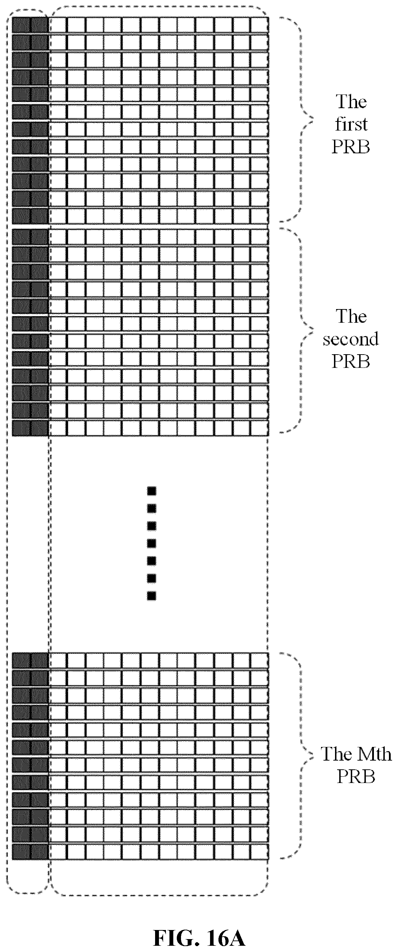

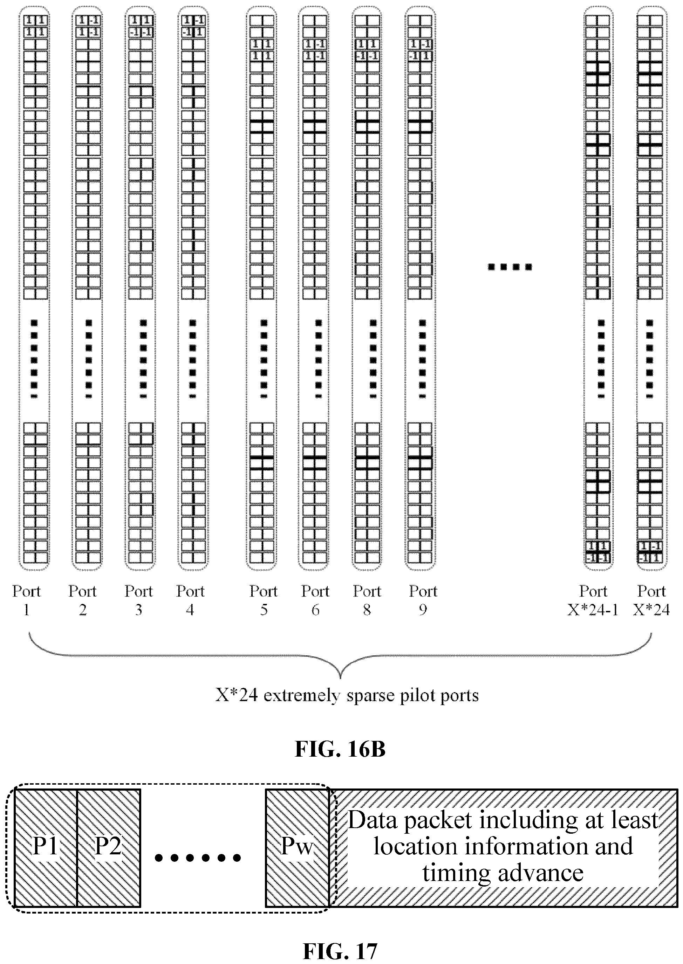

FIG. 16A is another diagram illustrating an implementation of a defined reference signal according to an embodiment. As shown in FIG. 16A, the system-defined reference signals occupy two OFDM symbols. FIG. 16B is another diagram illustrating an implementation of a defined reference signal according to an embodiment. As shown in FIG. 16B, each system-defined reference signal has non-zero symbols (non-zero signals or useful signals) on only one group of four adjacent REs, but four reference signals share one group of four adjacent REs. The four reference signals sharing four adjacent REs in the same group are differentiated from each other by using OCC codes. In this manner, in the transmission of X PRBs, a total of 24*X reference signals may be obtained from the reference signal area that occupies an overhead of 1/7. If there are 6 PRBs and an overhead of 1/7, 6*24 = 144 reference signals may be obtained, far greater than 8 or 12 of the NR system. This indicates that the number of extremely sparse pilots is proportional to the number of PRBs.

Each value in each embodiment of the present application is illustrative (not limiting) and is adjustable according to the actual situation.

It can be seen that sparse pilots actually mean that each pilot in the pilot set has few (for example, one to four) non-zero elements. In this manner, it is possible to significantly increase the number of pilots without increasing the pilot resource overheads, thereby significantly reducing the probability of pilot collisions. The base station estimates part of the information of the wireless channels from the sparse pilots, not requiring to estimate all of the information of the wireless channels from the sparse pilots. The base station extracts channel information from the data symbols and then performs equalization on the data symbols by using the channel information.

Such pilots are used for only spatial-domain combination, not used for channel equalization. Such pilots may be considered as spatial-domain combination reference signals.

Although the extremely sparse reference signals shown in FIG. 14A, FIG. 14B, FIG. 15A, and FIG. 15B are all in the first one or two symbols of the transmission resources, the present application does not limit the locations of the sparse reference signals. For example, the locations of the extremely sparse reference signals may also be on the symbols in the middle of the transmission resources.

In this embodiment, it is also feasible to use the independent multi-pilot technology and the extremely sparse pilot technology to reduce pilot collisions between the terminals, thereby enhancing the load capacity of the terminals.

FIG. 17 is a diagram illustrating an implementation of an information transmission method according to an embodiment. As shown in FIG. 17, the transmission of the data packet including the location information and the timing advance includes W extremely sparse reference signals. The data packet also includes information about the W extremely sparse reference signals, such as the indexes of the W extremely sparse reference signals. In this manner, once the data packet of the terminal is successfully decoded, all information about the extremely sparse reference signals used in this transmission is known, allowing for interference cancellation of the pilot signals.

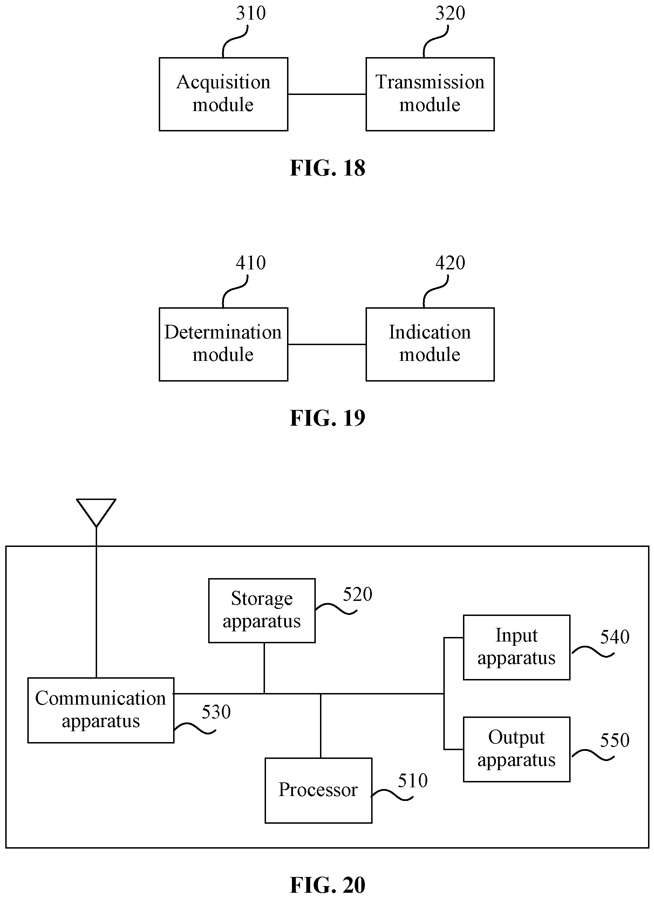

An embodiment of the present application provides an information transmission apparatus. FIG. 18 is a diagram illustrating the structure of an information transmission apparatus according to an embodiment. As shown in FIG. 18, the information transmission apparatus may be configured in a first communication node. The information transmission apparatus includes an acquisition module 310 and a transmission module 320.

The acquisition module 310 is configured to acquire location information of the first communication node and a timing advance of signal transmission of the first communication node. The transmission module 320 is configured to transmit a data packet including at least the location information and the timing advance to a second communication node. The sending time the data packet is transmitted to the second communication node is determined by the timing advance.

The transmission apparatus of this embodiment transmits the acquired location information of the first communication node to the corresponding second communication node, preventing the increase in power consumption caused by repeated interactions for establishing a connection to the second communication node. Based on this, the timing advance is transmitted to the second communication node so that the second communication node can sense the transmission environment according to the timing advance included in the transmitted data packet, reducing the difficulty in demodulating the data packet transmission by the base station.

In an embodiment, the broadcast signal of the second communication node includes a downlink synchronization signal or a downlink reference signal.

In an embodiment, the broadcast signal of the second communication node includes location information of the second communication node.

In an embodiment, transmitting the data packet including at least the location information and the timing advance to the second communication node includes transmitting, on a predefined common channel, the data packet including at least the location information and the timing advance to the second communication node.

In an embodiment, the apparatus further includes a signaling acquisition module configured to acquire target signaling; and a resource determination module configured to determine, according to the target signaling, transmission resource configured or defined by the second communication node. The transmission resource is configured to be used by the first communication node to transmit the data packet including at least the location information and the timing advance.

In an embodiment, the transmission module 320 includes a selection unit configured to select a time-frequency resource from the transmission resource; and a transmission unit configured to transmit, on the time-frequency resource, the data packet including at least the location information and the timing advance to the second communication node.

In an embodiment, the transmission module 320 includes a first determination unit configured to determine W pilots and a first transmission unit configured to transmit the data packet together with the W pilots to the second communication node. W is greater than 1.

In an embodiment, the W pilots are independent of each other.

In an embodiment, the W pilots are determined by using information in the transmitted data packet.

In an embodiment, the W pilots are determined by using at least one bit in the transmitted data packet.

In an embodiment, each pilot is from a pilot set including M pilots, and each pilot is determined from the pilot set by using log₂ (M) bits in the transmitted data packet.

In an embodiment, at least two of the W pilots are different types of pilot sequences or are from different pilot sets.

In an embodiment, at least two of the W pilots have different lengths.

In an embodiment, U symbols in each of the W pilots are non-zero values. U is greater than 0 and less than 5.

In an embodiment, the value of W is 2.

In an embodiment, the transmission module 320 includes a second determination unit configured to determine one pilot; and a second transmission unit configured to transmit the data packet together with the one pilot to the second communication node. U symbols in the one pilot are non-zero values. U is greater than 0 and less than 5.

In an embodiment, the transmission time interval of the data packet is at least greater than a set threshold.

In an embodiment, the set threshold is in seconds or minutes.

In an embodiment, the transmission module 320 includes a modulation unit configured to spread, by using a spreading sequence, a modulation symbol formed by encoding and modulating the data packet including at least the location information and the timing advance to obtain spread symbols; and a third transmission unit configured to transmit the spread symbols to the second communication node.

In an embodiment, the spreading sequence is determined by using information in the transmitted data packet.

In an embodiment, the spreading sequence is from a spreading sequence set including V spreading sequences, and the spreading sequence is determined from the spreading sequence set by using log₂ (V) bits in the transmitted data packet.

In an embodiment, the location information includes at least one of the following: location information from a Global Positioning System, location information from a BeiDou Navigation Satellite System, location information from a cellular positioning system, location information from a positioning system based on a positioning tag, location information from a wireless router positioning system, location information from a Bluetooth positioning system, or location information from an ultra-wideband positioning system.

In an embodiment, the data packet including the location information and the timing advance includes information related to the identity of the first communication node.

In an embodiment, the data packet including the location information and the timing advance does not include information related to the identity of the first communication node.

The information transmission device of this embodiment is based on the same concept as the information transmission method of any previous embodiment. For details not described in this embodiment, see any previous embodiment. This embodiment has the same effect as the performed information transmission method.

This embodiment of the present application provides an information transmission apparatus. FIG. 19 is a diagram illustrating the structure of another information transmission apparatus according to an embodiment. As shown in FIG. 19, the information transmission apparatus may be configured in a second communication node. The information transmission apparatus includes a determination module 410 and an indication module 420.

The determination module 410 is configured to determine a transmission resource. The indication module 420 is configured to indicate a position of the transmission resource to a first communication node by using a target signaling. The transmission resource is configured to be used by the first communication node to transmit a data packet including at least location information and a timing advance.

The information transmission apparatus of this embodiment determines transmission resources and then indicates positions of the transmission resources to the first communication node by using a defined target signaling. In this manner, the first communication node transmits, on the transmission resource, the data packet that includes at least the location information, preventing the increase in power consumption caused by repeated interactions for establishing a connection to the second communication node and transmitting the data packet by the first communication node.

In an embodiment, the timing advance of signal transmission of the first communication node is determined by a broadcast signal of the second communication node.

In an embodiment, the broadcast signal of the second communication node includes a downlink synchronization signal or a downlink reference signal.

In an embodiment, the broadcast signal of the second communication node includes location information of the second communication node.

In an embodiment, transmitting the data packet including at least the location information and the timing advance to the second communication node includes receiving, on a predefined common channel, the data packet including at least the location information and the timing advance and transmitted by the first communication node.

In an embodiment, the determination module 410 includes a defining unit configured to define or configure the transmission resources.

In an embodiment, the apparatus further includes a receiving module configured to receive the data packet including at least the location information and the timing advance and transmitted by the first communication node.

In an embodiment, the data packet is transmitted on the transmission resource.

In an embodiment, the receiving module includes a first receiving unit configured to receive the data packet transmitted by the first communication node and W pilots transmitted together with the data packet. W is greater than 1.

In an embodiment, W pilots are independent of each other.

In an embodiment, the W pilots are determined by using information in the transmitted data packet.

In an embodiment, the W pilots are determined by using at least one bit in the transmitted data packet.

In an embodiment, each pilot is from a pilot set including M pilots, and each pilot is determined from the pilot set by using log₂ (M) bits in the transmitted data packet.

In an embodiment, at least two of the W pilots are different types of pilot sequences or are from different pilot sets.

In an embodiment, at least two of the W pilots have different lengths.

In an embodiment, U symbols in each of the W pilots are non-zero values. U is greater than 0 and less than 5.

In an embodiment, the value of W is 2.

In an embodiment, the transmission time interval of the data packet is at least greater than a set threshold.

In an embodiment, the set threshold is measured in seconds or minutes.

In an embodiment, the apparatus also includes a second receiving unit configured to receive spread symbols transmitted by the first communication node. The spread symbols are symbols obtained by spreading a modulation symbol by using a spreading sequence. The modulation symbol is a symbol formed by encoding and modulating the data packet including at least the location information and the timing advance.

In an embodiment, the spreading sequence is determined by using information in the transmitted data packet.

In an embodiment, the spreading sequence is from a spreading sequence set including V spreading sequences, and the spreading sequence is determined from the spreading sequence set by using log₂ (V) bits in the transmitted data packet.

In an embodiment, the location information includes at least one of the following: location information from a Global Positioning System, location information from a BeiDou Navigation Satellite System, location information from a cellular positioning system, location information from a positioning system based on a positioning tag, location information from a wireless router positioning system, location information from a Bluetooth positioning system, or location information from an ultra-wideband positioning system.

In an embodiment, the receiving module includes a third receiving unit configured to receive the data packet transmitted by the first communication node and one pilot transmitted together with the data packet.

In an embodiment, the data packet including the location information and the timing advance includes information related to the identity of the first communication node.

In an embodiment, the data packet including the location information and the timing advance does not include information related to the identity of the first communication node.

The information transmission device of this embodiment is based on the same concept as the information transmission method of any previous embodiment. For details not described in this embodiment, see any previous embodiment. This embodiment has the same effect as the performed information transmission method.

An embodiment of the present application provides a communication node. The communication node includes a first communication node and a second communication node. FIG. 20 is a diagram illustrating the hardware structure of a communication node according to an embodiment. As shown in FIG. 20, the communication node of the present application includes a storage apparatus 520, a processor 510, and a computer program stored in the storage apparatus and executable by the processor 510. When executing the program, the processor 510 performs the information transmission method.

The communication node may further include the storage apparatus 520. One or more processors 510 may be configured in the communication node. One processor 510 is used as an example in FIG. 20. The storage apparatus 520 is configured to store one or more programs. When the one or more programs are executed by the one or more processors 510, the one or more processors 510 are caused to perform the data transmission method of any previous embodiment of the present application.

The communication node further includes a communication apparatus 530, an input apparatus 540, and an output apparatus 550.

The processor 510, the storage apparatus 520, the communication apparatus 530, the input apparatus 540, and the output apparatus 550 in the communication node may be connected via a bus or other means, with connection via a bus as an example in FIG. 20.

The input apparatus 540 may be configured to receive inputted digital or character information and generate key signal input related to user settings and function control of the communication node. The output apparatus 550 may include a display device such as a display screen.

The communication apparatus 530 may include a receiver and a sender. The communication apparatus 530 is configured to perform information transceiving communication under the control of the processor 510.

As a computer-readable storage medium, the storage apparatus 520 may be configured to store software programs, computer-executable programs and modules, such as program instructions/modules (for example, the acquisition module 310 and the transmission module 320 in the information transmission apparatus or the determination module 410 and the indication module 420 in the information transmission apparatus) corresponding to the information transmission method of any previous embodiment of the present application. The storage apparatus 520 may include a program storage region and a data storage region, where the program storage region may store an operating system and an application program required by at least one function while the data storage region may store data created depending on use of the communication node. Additionally, the storage apparatus 520 may include a high speed random-access memory and may further include a non-volatile memory, such as at least one magnetic disk memory, a flash memory or another non-volatile solid-state memory. In some examples, the storage apparatus 520 may include memories which are remotely disposed with respect to the processor 510. These remote memories may be connected to the communication node via a network. Examples of the preceding network include, but are not limited to, the Internet, an intranet, a local area network, a mobile communication network, and a combination thereof.

An embodiment of the present application provides a storage medium storing a computer program which, when executed by a processor, causes the processor to perform the information transmission method of any previous embodiment.

The method is applied to a first communication node. The method includes acquiring the location information of the first communication node and the timing advance of signal transmission of the first communication node; and transmitting a data packet including at least the location information and the timing advance to a second communication node. The sending time the data packet is transmitted to the second communication node is determined by the timing advance.

The method is applied to a second communication node. The method includes determining a transmission resource; and indicating a position of the transmission resource to a first communication node by using target signaling. The transmission resource is configured to be used by the first communication node to transmit a data packet including at least location information and a timing advance.

A computer storage medium in the embodiment of the present application may adopt any combination of one or more computer-readable media. The computer-readable media may be computer-readable signal media or computer-readable storage media. For example, a computer-readable storage medium may be, but is not limited to, an electrical, magnetic, optical, electromagnetic, infrared, or semiconductor system, apparatus, or device or any combination thereof. Examples of the computer-readable storage medium include (a non-exhaustive list): an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc ROM (CD-ROM), an optical memory device, a magnetic memory device, or any suitable combination thereof. The computer-readable storage medium may be any tangible medium including or storing a program. The program may be used by or used in conjunction with an instruction execution system, apparatus, or device.

A computer-readable signal medium may include a data signal propagated in a baseband or as part of a carrier. The data signal carries computer-readable program codes. The data signal propagated in this manner may be in multiple forms, including, but not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

Program codes included in the computer-readable media may be transmitted by any suitable medium including, but not limited to, a wireless medium, a wire, an optical cable, a radio frequency (RF), or any suitable combination thereof.

Computer program codes for performing the operations of the present application may be written in one or more programming languages or a combination of multiple programming languages. The programming languages include object-oriented programming languages such as Java, Smalltalk, and C++ and may further include conventional procedural programming languages such as "C" or similar programming languages. The program codes may be executed entirely on a user computer, executed partly on a user computer, executed as a stand-alone software package, executed partly on a user computer and partly on a remote computer, or executed entirely on a remote computer or a server. In the case where the remote computer is involved, the remote computer may be connected to the user computer through any type of network including a local area network (LAN) or a wide area network (WAN), or may be connected to an external computer (for example, via the Internet provided by an Internet service provider).

The preceding are only example embodiments of the present application and are not intended to limit the scope of the present application.

It is to be understood by those skilled in the art that the term "user terminal" encompasses any suitable type of radio user device, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

The embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program operations, may represent interconnected logic circuits, modules, and functions, or may represent a combination of program operations and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). The computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. An information transmission method, the method being applied to a first communication node and comprising:
acquiring location information of the first communication node and a timing advance of signal transmission of the first communication node; and
transmitting a data packet comprising at least the location information and the timing advance to a second communication node;
wherein a sending time the data packet is transmitted to the second communication node is determined by the timing advance.

2. The method of claim **1,** wherein the timing advance of the signal transmission of the first communication node is determined by a broadcast signal of the second communication node.

3. The method of claim 2, wherein the broadcast signal of the second communication node comprises a downlink synchronization signal or a downlink reference signal.

4. The method of claim 2, wherein the broadcast signal of the second communication node comprises location information of the second communication node.

5. The method of claim 1, wherein transmitting the data packet comprising at least the location information and the timing advance to the second communication node comprises:
transmitting, on a predefined common channel, the data packet comprising at least the location information and the timing advance to the second communication node.

6. The method of claim 1, further comprising:
acquiring target signaling; and
determining, according to the target signaling, a transmission resource configured or defined by the second communication node, wherein the transmission resource is configured to be used by the first communication node to transmit the data packet comprising at least the location information and the timing advance.

7. The method of claim 6, wherein transmitting the data packet comprising at least the location information and the timing advance to the second communication node comprises:
selecting a time-frequency resource from the transmission resource; and
transmitting, on the time-frequency resource, the data packet comprising at least the location information and the timing advance to the second communication node.

8. The method of claim 1, wherein transmitting the data packet comprising at least the location information and the timing advance to the second communication node comprises:
determining W pilots; and
transmitting the data packet together with the W pilots to the second communication node;
wherein W is greater than 1.

9. The method of claim 8, wherein the W pilots are independent of each other.

10. The method of claim 8, wherein the W pilots are determined by using information in the transmitted data packet.

11. The method of claim 10, wherein the W pilots are determined by using at least one bit in the transmitted data packet.

12. The method of claim 10, wherein each pilot is from a pilot set comprising M pilots, and each pilot is determined from the pilot set by using log₂ (M) bits in the transmitted data packet.

13. The method of claim 8, wherein at least two of the W pilots are different types of pilot sequences or are from different pilot sets.

14. The method of claim 8, wherein at least two of the W pilots have different lengths.

15. The method of claim 8, wherein U symbols in each of the W pilots are non-zero values, wherein U is greater than 0 and less than 5.

16. The method of claim 8, wherein a value of W is 2.

17. The method of claim 1, wherein transmitting the data packet comprising at least the location information and the timing advance to the second communication node comprises:
determining one pilot, wherein U symbols in the one pilot are non-zero values, wherein U is greater than 0 and less than 5; and
transmitting the data packet together with the one pilot to the second communication node.

18. The method of claim 1, wherein a transmission time interval of the data packet is at least greater than a set threshold.

19. The method of claim 18, wherein the set threshold is in seconds or minutes.

20. The method of claim 1, wherein transmitting the data packet comprising at least the location information and the timing advance to the second communication node comprises:
spreading, by using a spreading sequence, a modulation symbol formed by encoding and
modulating the data packet comprising at least the location information and the timing advance to obtain spread symbols; and
transmitting the spread symbols to the second communication node.

21. The method of claim 20, wherein the spreading sequence is determined by using information in the transmitted data packet.

22. The method of claim 20, wherein the spreading sequence is from a spreading sequence set comprising V spreading sequences, and the spreading sequence is determined from the spreading sequence set by using log₂ (V) bits in the transmitted data packet.

23. The method of claim 1, wherein the data packet comprising the location information and the timing advance does not comprise information related to an identity of the first communication node.

24. The method of claim 1, wherein the data packet comprising the location information and the timing advance comprises information related to an identity of the first communication node.

25. The method of any one of claims 1 to 24, wherein the location information comprises at least one of the following:
location information from a Global Positioning System, location information from a BeiDou Navigation Satellite System, location information from a cellular positioning system, location information from a positioning system based on a positioning tag, location information from a wireless router positioning system, location information from a Bluetooth positioning system, or location information from an ultra-wideband positioning system.

26. An information transmission method, the method being applied to a second communication node and comprising:
determining a transmission resource; and
indicating a position of the transmission resource to a first communication node by using target signaling, wherein the transmission resource is configured to be used by the first communication node to transmit a data packet comprising at least location information and a timing advance.

27. The method of claim 26, wherein determining the transmission resources comprises:
defining or configuring the transmission resource.

28. The method of claim 26, further comprising:
receiving the data packet comprising at least the location information and the timing advance and
transmitted by the first communication node.

29. The method of claim 28, wherein the data packet is transmitted on the transmission resource.

30. The method of claim 29, wherein receiving the data packet comprising at least the location information and the timing advance and transmitted by the first communication node comprises:
receiving the data packet transmitted by the first communication node and W pilots transmitted together with the data packet, wherein W is greater than 1.

31. The method of claim 29, wherein a transmission time interval of the data packet is at least greater than a set threshold.

32. The method of claim 31, wherein the set threshold is in seconds or minutes.

33. The method of claim 26, further comprising:
receiving spread symbols transmitted by the first communication node, wherein the spread symbols are symbols obtained by spreading a modulation symbol by using a spreading sequence,
and the modulation symbol is a symbol formed by encoding and modulating the data packet comprising at least the location information and the timing advance.

34. The method of claim 33, wherein the spreading sequence is determined by using information in the transmitted data packet.

35. The method of claim 28 or 33, wherein the location information comprises at least one of the following:
location information from a Global Positioning System, location information from a BeiDou Navigation Satellite System, location information from a cellular positioning system, location information from a positioning system based on a positioning tag, location information from a wireless router positioning system, location information from a Bluetooth positioning system, or location information from an ultra-wideband positioning system.

36. A communication node, comprising:
at least one processor; and
a storage apparatus configured to store at least one program;
wherein the at least one program, when executed by the at least one processor, causes the at least one processor to perform the information transmission method of any one of claims 1 to 35.

37. A storage medium storing a computer program which, when executed by a processor, causes the processor to perform the information transmission method of any one of claims 1 to 35.
